# EUROPÄISCHE PATENTSCHRIFT

(11) **EP 1 963 340 B1**
(45) Veröffentlichungstag und Bekanntmachung des Hinweises auf die Patenterteilung: **14.09.2011**
(21) Anmeldenummer: 06819624.5
(22) Anmeldetag: 20.11.2006
(51) Int. Cl.: C07F 7/18

(54) **VERFAHREN ZUR HERSTELLUNG VON (MERCAPTOORGANYL)ALKYLPOLYETHERSILANEN**
METHOD FOR THE PRODUCTION OF (MERCAPTOORGANYL)ALKYL POLYETHER SILANES
PROCEDE DE PRODUCTION DE (MERCAPTOORGANYL)ALKYLPOLYETHERSILANES

(30) Priorität: 16.12.2005 DE 102005060122
(43) Veröffentlichungstag der Anmeldung: 03.09.2008
(73) Patentinhaber: Evonik Degussa GmbH, 45128 Essen (DE)
(72) Erfinder: KORTH, Karsten, 79639 Grenzach-Wyhlen (DE); LAUR, Dirk, 79688 Hausen I.W. (DE); ALBERT, Philipp, 79539 Lörrach (DE); KIEFER, Ingo, 79739 Schwörstadt-Dossenbach (DE)
(74) Vertreter: Forster, Frank
(86) Internationale Anmeldenummer: PCT/EP2006/068674
(87) Internationale Veröffentlichungsnummer: WO 2007/068555

(56) Entgegenhaltungen:
- EP-A- 1 700 861
- EP-A1- 0 086 271
- EP-A1- 0 170 865
- EP-A1- 1 285 926
- EP-A1- 1 529 782
- EP-A1- 1 538 152
- EP-A2- 0 085 831
- EP-A2- 1 683 801
- US-A- 5 840 952

## Beschreibung

Die Erfindung betrifft ein Verfahren zur Herstellung von (Mercaptoorganyl)alkylpolyethersilanen.

Aus EP 1285926 ist die Herstellung von Organosiliciumverbindungen der Formeln (R¹O)₂(R²O)Si-R³-Yₘ und (R¹O) (R²O)₂Si-R³-Yₘ durch Umsetzung von Silanen der allgemeinen Formel (R¹O)₃Si-R³-Yₘ mit Alkylpolyetheralkoholen R²OH bekannt.

Aus JP 62-181346 ist die Herstellung von (Mercaptoorganyl)alkylpolyethersilanen aus (Mercaptoorganyl)alkoxysilanen durch Umesterung mit Alkylpolyetheralkoholen bekannt.

Ferner sind aus EP 1529782 bzw. EP 1538152 Verfahren zur Herstellung von (Mercaptoorganyl)-alkoxysilanen bekannt, wobei man Alkalimetallsulfid bzw. Alkalimetallhydrogensulfid mit einem Gemisch aus (Halogenorganyl)alkoxysilan und (Halogenorganyl)-halogensilan in Alkohol unter Luftabschluß umsetzt.

Aus JP 3091993, JP 2005-047846, JP 2004-099483 und US 5840952 sind Verfahren zur Herstellung von Mercaptopropylsilanen der Formel HS- (CH₂)₃-Si(R¹)ₙ(OR²)₃₋ n durch Umsetzung von Halogenpropylsilanen der Formel Y- (CH₂)₃-Si (R¹)ₙ(OR²)₃₋ₙ mit Alkalimetallhydrogensulfid bekannt.

Aus DE 102005032658.7 ist ein Verfahren zur Herstellung von Mercaptosilanen bekannt, wobei man Silane der allgemeinen Formel

(R¹¹) (R¹¹) (R¹⁰) Si-R³-S-R⁴

mit einem alkoxylierten Alkohol R¹-H unter Abspaltung von R⁷-OH katalysiert umgesetzt und R⁷-OH von dem Reaktionsgemisch abtrennt.

Aus DE 102005052233 ist ein Verfahren zur Herstellung von Organosilanen der allgemeinen Formel (R₂(R'O)Si-R"-]ₙAₘ durch Umsetzung von (Halogenorganyl)alkoxysilane mit wasserhaltigen Schwefelungsreagenzien bekannt.

Nachteile der bekannten Verfahren sind die langen Reaktionszeiten und niedrigen Umsätze bzw. niedrige Raum-Zeitausbeuten bei guter Selektivität.

Aufgabe der Erfindung ist es, ein Verfahren zur Herstellung von (Mercaptoorganyl)alkylpolyethersilanen zur Verfügung zu stellen, daß kurze Reaktionszeiten mit hohen Umsätzen bzw. hohe Raum-Zeitausbeuten mit guter Selektivität bei der Umsetzung der Ausgangsstoffe ermöglicht.

Gegenstand der Erfindung ist ein Verfahren zur Herstellung von (Mercaptoorganyl)alkylpolyethersilanen der allgemeinen Formel I

(X) (X') (X'') Si - R^{I}-SH I

, wobei
X eine Alkylpolyethergruppe O-((CR^{II}₂)_{w}-O-)ᵥ Alk, vorzugsweise O-(CH₂-CH₂-O-)ᵤ Alk oder O-(CH(CH₃)-CH₂-O-)ᵣ Alk, ist, mit
v = 1-40, bevorzugt 2-30, besonders bevorzugt 3-25, ganz besonders bevorzugt 4-20, außerordentlich bevorzugt 6-16,
w = 1-40, bevorzugt 2-30, besonders bevorzugt 2-20, ganz besonders bevorzugt 3-10,
u = 1-40, bevorzugt 2-30, besonders bevorzugt 3-25, ganz besonders bevorzugt 4-20, außerordentlich bevorzugt 6-16,
r = 1-40, bevorzugt 2-30, besonders bevorzugt 3-25, ganz besonders bevorzugt 4-20, außerordentlich bevorzugt 6-16,
R^{II} unabhängig voneinander H, eine Phenyl- oder eine Alkylgruppe, vorzugsweise eine C₁-C₁₁ Alkylgruppe, , besonders bevorzugt eine CH₃- oder CH₂-CH₃-Gruppe, ist, Alk eine verzweigte oder unverzweigte, gesättigte oder ungesättigte, substituierte oder unsubstituierte, aliphatische, aromatische oder gemischt aliphatische /aromatische einbindige C₁-C₃₅ -, bevorzugt C₂-C₂₅ -, besonders bevorzugt C₃-C₂₀ -, ganz besonders bevorzugt C₆-C₁₈ -, außerordentlich bevorzugt C₁₁-C₁₈, Kohlenwasserstoffgruppe ist,
X' ein verzweigtes oder unverzweigtes Alkyl, bevorzugt C₁-C₁₈ Alkyl-,besonders bevorzugt CH₃, CH₂-CH₃, CH(CH₃)-CH₃, CH₂-CH₂-CH₃ oder C₄-C₁₈- Alkyl,
ein verzweigtes oder unverzweigtes Alkoxy, bevorzugt C₁-C₁₈ Alkoxy-, besonders bevorzugt -OCH₃, -OCH₂-CH₃, - OCH(CH₃)-CH₃, -OCH₂-CH₂-CH₃, -OC₁₂H₂₅, -OC₁₃H₂₇, -OC₁₄H₂₉ oder C₁₅-C₁₈ Alkoxy,
ein verzweigtes oder unverzweigtes C₂-C₂₅ Alkenyloxy-, vorzugsweise C₄-C₂₀ Alkenyloxy, besonders bevorzugt C₆ bis C₁₈ Alkenyloxy,
ein C₆-C₃₅ Aryloxy-, vorzugsweise C₉-C₃₀ Aryloxy, besonders bevorzugt Phenyloxy (-OC₆H₅) oder C₉ bis C₁₈ Aryloxy,
eine verzweigte oder unverzweigte C₇-C₃₅ Alkylaryloxygruppe, vorzugsweise C₉-C₃₀
Alkylaryloxygruppe, besonders bevorzugt Benzyloxy-, (-O-CH₂-C₆H₅) oder -O-CH₂-CH₂-C₆H₅,
eine verzweigte oder unverzweigte C₇-C₃₅ Aralkyloxygruppe, vorzugsweise C₉-C₂₅ Aralkyloxygruppe, besonders bevorzugt Tolyloxy (-O-C₆H₄-CH₃) oder eine C₉ bis C₁₈ Aralkyloxygruppe,
oder ein X ist,
X" ein verzweigtes oder unverzweigtes Alkyl, bevorzugt C₁-C₁₈ Alkyl-,besonders bevorzugt CH₃, CH₂-CH₃, CH(CH₃)-CH₃, CH₂-CH₂-CH₃ oder C₄-C₁₈- Alkyl,
ein verzweigtes oder unverzweigtes Alkoxy, bevorzugt C₁-C₁₈ Alkoxy-, besonders bevorzugt -OCH₃, -OCH₂-CH₃, - OCH(CH₃)-CH₃, -OCH₂-CH₂-CH₃, -OC₁₂H₂₅, -OC₁₃H₂₇, -OC₁₄H₂₉ oder C₁₅-C₁₈ Alkoxy,
ein verzweigtes oder unverzweigtes C₂-C₂₅ Alkenyloxy-, vorzugsweise C₄-C₂₀ Alkenyloxy, besonders bevorzugt C₆ bis C₁₈ Alkenyloxy,
ein C₆-C₃₅ Aryloxy-, vorzugsweise C₉-C₃₀ Aryloxy, besonders bevorzugt Phenyloxy (-OC₆H₅) oder C₉ bis C₁₈ Aryloxy,
eine verzweigte oder unverzweigte C₇-C₃₅ Alkylaryloxygruppe, vorzugsweise C₉-C₃₀
Alkylaryloxygruppe, besonders bevorzugt Benzyloxy-, (-O-CH₂-C₆H₅) oder -O-CH₂-CH₂-C₆H₅,
eine verzweigte oder unverzweigte C₇-C₃₅ Aralkyloxygruppe, vorzugsweise C₉-C₂₅ Aralkyloxygruppe, besonders bevorzugt Tolyloxy (-O-C₆H₄-CH₃) oder eine C₉ bis C₁₈ Aralkyloxygruppe,
oder ein X ist,
R^{I} eine verzweigte oder unverzweigte, gesättigte oder ungesättigte, aliphatische, aromatische oder gemischt aliphatische /aromatische zweibindige C₁-C₃₀ Kohlenwasserstoffgruppe, die gegebenenfalls substituiert ist, ist, welches dadurch gekennzeichnet ist, daß man ein trockenes Mercaptierungsreagenz mit einem Wassergehalt von kleiner als 3 Gew.-% mit einem (Halogenorganyl)-alkylpolyethersilan umsetzt.

Die Umsetzung kann unter Luftabschluss durchgeführt werden. Die Umsetzung kann in einem geschlossenen Gefäß durchgeführt werden.

Die Umsetzung kann in einem Lösungsmittel oder lösungsmittelfrei durchgeführt werden.

Es können bei dem erfindungsgemäßen Verfahren zur Herstellung von (Mercaptoorganyl)alkylpolyethersilanen Verbindungen der allgemeinen Formel I oder auch Mischungen aus Verbindungen der allgemeinen Formel I entstehen.

Es können bei dem erfindungsgemäßen Verfahren durch Hydrolyse und Kondensation der Verbindungen der allgemeinen Formel I deren Oligomere als Nebenprodukte entstehen.

R^{I} kann -CH₂-, -CH₂CH₂-, -CH₂CH₂CH₂-, -CH₂CH₂CH₂CH₂-, - CH(CH₃)-, -CH₂CH(CH₃)-, -CH(CH₃)CH₂-, -C(CH₃)₂-, - CH(C₂H₅)-, -CH₂CH₂CH(CH₃) -, -CH₂(CH₃)CH₂CH₂-, -CH₂CH (CH₃) CH₂-, -CH₂CH₂CH₂CH₂CH₂-, -CH₂CH₂CH₂CH₂CH₂CH₂-, -CH₂CH₂CH₂CH₂CH₂CH₂CH₂-, -CH₂CH₂CH₂CH₂CH₂CH₂CH₂CH₂-, -CH₂CH₂CH₂CH₂CH₂CH₂CH₂CH₂CH₂-, -CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂CH₂CH₂CH₂CH₂-, -CH₂CH₂CH₂CH₂CH₂CH₂CH₂CH₂CH2CH₂CH₂CH₂CH₂CH₂CH₂CH₂CH₂CH₂-
oder 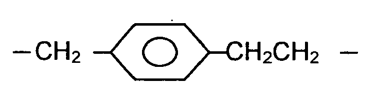 bedeuten.

Die Alkylpolyethergruppe O- ( (CR^{II}₂)_{w}-O-) Alk kann O-(CR^{II}₂-CR^{II}₂-O)ᵥ-Alk sein.

Bevorzugt kann die Gruppe (CR^{II}₂-CR^{II}₂-O)ᵥ-Alk Ethylenoxid-, (CH₂-CH₂-O)ᵥ-Alk ,
Propylenoxid-, (CH(CH₃)-CH₂-_{O})ᵥ-Alk oder (CH₂-CH(CH₃)₂-O)ᵥ-Alk oder
Butylenoxideinheiten, beispielsweise (-CH(CH₂-CH₃)-CH₂-O)ᵥ-Alk oder (-CH₂-CH(CH₂-CH₃)-O)ᵥ-Alk, enthalten.

Die Alkylpolyethergruppe O-(CR^{II}₂-CR^{II}₂-O)ᵥ-Alk kann O-(CH₂-CH₂O)-C₄H₉, O-(CH₂-CH₂O)₂-C₄H₉, O-(CH₂-CH₂O)₃-C₄H₉, O-(CH₂-CH₂O)₄-C₄H₉, O-(CH₂-CH₂O)₅-C₄H₉, O-(CH₂-CH₂O)₆-C₄H₉, O-(CH₂-CH₂O)₇-C₄H₉,
O-(CH(CH₃)-CH₂O)-C₄H₉, O-(CH(CH₃)-CH₂O)₂-C₄H₉, O-(CH(CH₃)-CH₂O)₃-C₄H₉, O- (CH (CH₃) -CH₂O)₄-C₄H₉, O-(CH (CH₃)-CH₂O) ₅-C₄H₉, O- (CH (CH₃) -CH₂O)₆-C₄H₉, O-(CH (CH₃) -CH₂O)₇-C₄H₉,
0- (CH₂-CH₂O) -C₅H₁₁, O- (CH₂-CH₂O)₂-C₅H₁₁, O- (CH₂-CH₂O)₃-C₅H₁₁, O-(CH₂-CH₂O)₄-C₅H₁₁, O-(CH₂-CH₂O)₅-C₅H₁₁, O- (CH₂-CH₂O)₆-C₅H₁₁, O-(CH₂-CH₂O)₇-C₅H₁₁,
O-(CH(CH₃)-CH₂O)-C₅H₁₁, O-(CH (CH₃)-CH₂O)₂-C₅H₁₁, O-(CH (CH₃)-CH₂O)₃-C₅H₁₁, O- (CH (CH₃)-CH₂O)₄-C₅H₁₁, O- (CH (CH₃)-CH₂O)₅-C₅H₁₁, O- (CH (CH₃)-CH₂O)₆-C₅H₁₁, O- (CH (CH₃)-CH₂O)₇-C₅H₁₁,
O-(CH₂-CH₂O)-C₆H₁₃, O-(CH₂-CH₂O)₂-C₆H₁₃, O-(CH₂-CH₂O)₃-C₆H₁₃, O-(CH₂-CH₂O)₄-C₆H₁₃, O-(CH₂-CH₂O)₅-C₆H₁₃, O- (CH₂-CH₂O)₆-C₆H₁₃, O-(CH₂-CH₂O)₇-C₆H₁₃,
O- (CH (CH₃)-CH₂O) -C₆H₁₃, O- (CH (CH₃)-CH₂O)₂-C₆H₁₃, O-(CH (CH₃) -CH₂O)₃-C₆H₁₃, O- (CH (CH₃) -CH₂O)₄-C₆H₁₃, O-(CH (CH₃) - CH₂O)₅-C₆H₁₃, O- (CH (CH₃) -CH₂O)₆-C₆H₁₃, O- (CH (CH₃)-CH₂O)₇-C₆H₁₃,
O-(CH₂-CH₂O) -C₇H₁₅, O-(CH₂-CH₂O)₂-C₇H₁₅, O-(CH₂-CH₂O)₃-C₇H₁₅, O-(CH₂-CH₂O)₄-C₇H₁₅, O-(CH₂-CH₂O)₅-C₇H₁₅, O-(CH₂-CH₂O)₆-C₇H₁₅, O-(CH₂-CH₂O)₇-C₇H₁₅,
O-(CH(CH₃) -CH₂O) -C₇H₁₅, O-(CH (CH₃) -CH₂O)₂-C₇H₁₅, O-(CH(CH₃)-CH₂O)₃-C₇H₁₅, O-(CH(CH₃)-CH₂O)₄-C₇H₁₅, O-(CH(CH₃)-CH₂O)₅-C₇H₁₅, O-(CH(CH₃)-CH₂O)₆-C₆H₁₅, O-(CH(CH₃)-CH₂O)₇-C₇H₁₅,
O-(CH₂-CH₂O)-C₈H₁₇, O-(CH₂-CH₂O)₂-C₈H₁₇, O-(CH₂-CH₂O)₃-C₈H₁₇, O-(CH₂-CH₂O)₄-C₈H₁₇, O-(CH₂-CH₂O)₅-C₈H₁₇, O-(CH₂-CH₂O)₆-C₈H₁₇, O-(CH₂-CH₂O)₇-C₈H₁₇,
O- (CH (CH₃) -CH₂O)-C₈H₁₇, O- (CH (CH₃) -CH₂O)₂-C₈H₁₇, O-(CH (CH₃) -CH₂O)₃-C₈H₁₇, O- (CH (CH₃)-CH₂O)₄-C₈H₁₇, O-(CH (CH₃) - CH₂O)₅-C₈H₁₇, O- (CH (CH₃) -CH₂O)₆-C₈H₁₇, O- (CH (CH₃) -CH₂O)₇-C₈H₁₇,
O-(CH₂-CH₂O)-C₉H₁₉, O-(CH₂-CH₂O)₂-C₉H₁₉, O-(CH₂-CH₂O)₃-C₉H₁₉, O-(CH₂-CH₂O)₄-C₉H₁₉, O-(CH₂-CH₂O)₅-C₉H₁₉, O-(CH₂-CH₂O)₆-C₉H₁₉, O-(CH₂-CH₂O)₇-C₉H₁₉,
O- (CH (CH₃) -CH₂O)-C₉H₁₉, O- (CH (CH₃)-CH₂O)₂-C₉H₁₉, O-(CH(CH₃)-CH₂O)₃-C₉H₁₉, O-(CH(CH₃)-CH₂O)₄-C₉H₁₉, O-(CH(CH₃)-CH₂O)₅-C₉H₁₉, O-(CH(CH₃)-CH₂O)₅-C₉H₁₉, O-(CH(CH₃)-CH₂O)₇-C₉H₁₉,
O-(CH₂-CH₂O)-C₂OH₂₁, O-(CH₂-CH₂O)₂-C₂H₂₁, O-(CH₂-CH₂O)₃-C₁₀H₂₁, O-(CH₂-CH₂O)₄-C₁₀H₂₁, O-(CH₂-CH₂O)₅-C₁₀H₂₁, O-(CH₂-CH₂O)₆-C₁₀H₂₁, O-(CH₂-CH₂O)₇-C₁₀H₂₁,
O-(CH(CH₃)-CH₂O)-C₁₀H₂₁, O-(CH(CH₃)-CH₂O)₂-C₁₀H₂₁, O-(CH (CH₃) -CH₂O)₃-C₁₀H₂₁, O- (CH (CH₃) -CH₂O)₄-C₁₀H₂₁, O- (CH (CH₃) -CH₂O)₅-C₁₀H₂₁, O- (CH (CH₃) -CH₂O)₆-C₁₀H₂₁, O-(CH (CH₃) -CH₂O)₇-C₁₀H₂₁,
O- (CH₂-CH₂O)-C₁₁H₂₃, O- (CH₂-CH₂O)₂-C₁₁H₂₃, O- (CH₂-CH₂O)₃-C₁₁H₂₃, O-(CH₂-CH₂O)₄-C₁₁H₂₃, O-(CH₂-CH₂O)₅-C₁₁H₂₃, O-(CH₂-CH₂O)₆-C₁₁H₂₃, O-(CH₂-CH₂O)₇-C₁₁H₂₃,
O- (CH (CH₃) -CH₂O)-C₁₁H₂₃, O- (CH (CH₃)-CH₂O)₂-C₁₁H₂₃, O-(CH (CH₃) -CH₂O)₃-C₁₁H₂₃, O- (CH (CH₃) -CH₂O)₄-C₁₁H₂₃, O- (CH (CH₃) -CH₂O)₅-C₁₁H₂₃, O- (CH (CH₃) -CH₂O)₆-C₁₁H₂₃, O-(CH (CH₃) -CH₂O)₇-C₁₁H₂₃,
O-(CH₂-CH₂O)-C₁₂H₂₅, O-(CH₂-CH₂O)₂-C₁₂H₂₅, O-(CH₂-CH₂O)₃-C₁₂H₂₅, O-(CH₂-CH₂O)₄-C₁₂H₂₅, O-(CH₂-CH₂O)₅-C₁₂H₂₅, O-(CH₂-CH₂O) ₆-C₁₂H₂₅, O-(CH₂-CH₂O)₇-C₁₂H₂₅,
O-(CH(CH₃) -CH₂O)-C₁₂H₂₅, O-(CH (CH₃) -CH₂O)₂-C₁₂H₂₅, O-(CH (CH₃)-CH₂O)₃-C₁₂H₂₅, O-(CH (CH₃)-CH₂O)₄-C₁₂H₂₅, O-(CH (CH₃)-CH₂O)₅-C₁₂H₂₅,O- (CH (CH₃)-CH₂O)₆-C₁₂H₂₅,O-(CH (CH₃)-CH₂O)₇-C₁₂H₂₅,
O-(CH₂-CH₂O)-C₁₃H₂₇,O-(CH₂-CH₂O)₂-C₁₃H₂₇,O-(CH₂-CH₂O)₃-C₁₃H₂₇,O-(CH₂-CH₂)₄-C₁₃H₂₇,O-(CH₂-CH₂O)₅-C₁₃H₂₇,O-(CH₂-CH₂O)₆-C₁₃H₂₇,O-(CH₂-CH₂O)₇-C₁₃H₂₇,
O-(CH (CH₃)-CH₂O)-C₁₃H₂₇, O-(CH (CH₃)-CH₂O)₂-C₁₃H₂₇, O-(CH (CH₃)-CH₂O)₃-C₁₃H₂₇, O-(CH (CH₃)-CH₂O)₄-C₁₃H₂₇, O-(CH (CH₃)-CH₂O)₅-C₁₃H₂₇, O-(CH (CH₃)-CH₂O)₆-C₁₃H₂₇, O-(CH (CH₃)-CH₂O)₇-C₁₃H₂₇,
O-(CH₂-CH₂O)-C₁₄H₂₉,O-(CH₂-CH₂O)₂-C₁₄H₂₉,O-(CH₂-CH₂O)₃-C₁₄H₂₉, O-(CH₂-CH₂O)₄-C₁₄H₂₉, O-(CH₂-CH₂O)₅-C₁₄H₂₉, O-(CH₂-CH₂O)₆-C₁₄H₂₉, O-(CH₂)-CH₂O)₇-C₁₄H₂₉,
O-(CH(CH₃)-CH₂O)-C₁₄H₂₉, O-(CH(CH₃)-CH₂O)₂-C₁₄H₂₉, O-(CH (CH₃)-CH₂O)₃-C₁₄H₂₉, O-(CH (CH₃)-CH₂O)₄-C₁₄H₂₉, O-(CH(CH₃)-CH₂O)₅-C₁₄H₂₉, O-(CH(CH₃)-CH₂O)₆-C₁₄H₂₉, O-(CH (CH₃)-CH₂O)₇-C₁₄H₂₉,
O-(CH₂-CH₂O)-C₁₅H₃₁, O-(CH₂-CH₂O)₂-C₁₅H₃₁, O-(CH₂-CH₂O)₃-C₁₅H₃₁, O-(CH₂-CH₂O)₄-C₁₅H₃₁, O-(CH₂-CH₂O)₅-C₁₅H₃₁, O-(CH₂-CH₂O)₆-C₁₅H₃₁, O-(CH₂-CH₂O)₇-C₁₅H₃₁,
O-(CH (CH₃)-CH₂O)-C₁₅H₃₁, O-(CH (CH₃)-CH₂O)₂-C₁₅H₃₁, O-(CH(CH₃)-CH₂O)₃-C₁₅H₃₁, O-(CH(CH₃)-CH₂O)₄-C₁₅H₃₁, O-(CH(CH₃)-CH₂O)₅-C₁₅H₃₁, O-(CH(CH₃)-CH₂O)₆-C₁₅H₃₁, O-(CH (CH₃)-CH₂O)₇-C₁₅H₃₁,
O-(CH₂-CH₂O)-C₁₆H₃₃, O-(CH₂-CH₂O)₂-C₁₆H₃₃, O-(CH₂-CH₂O)₃-C₁₆H₃₃, O-(CH₂-CH₂O)₄-C₁₆H₃₃, O-(CH₂-CH₂O)₅-C₁₆H₃₃, O-(CH₂-CH₂O)₆-C₁₆H₃₃, O-(CH₂-CH₂O)₇-C₁₆H₃₃,
O-(CH(CH₃)-CH₂O)-C₁₆H₃₃, O-(CH (CH₃)-CH₂O)₂-C₁₆H₃₃, O-(CH (CH₃)-CH₂O)₃-C₁₆H₃₃, O-(CH (CH₃)-CH₂O)₄-C₁₆H₃₃,
O-(CH (CH₃)-CH₂O)₅-C₁₆H₃₃, O-(CH(CH₃) -CH₂O)₆-C₁₆H₃₃, O-(CH (CH₃) -CH₂O)₇-C₁₆H₃₃,
O-(CH₂-CH₂O)-C₁₇H₃₅, O-(CH₂-CH₂O)₂-C₁₇H₃₅, O-(CH₂-CH₂O)₃-C₁₇H₃₅, O- (CH₂-CH₂O)₄-C₁₇H₃₅, O-(CH₂-CH₂O)₅-C₁₇H₃₅, O-(CH₂-CH₂O)₆-C₁₇H₃₅, O-(CH₂-CH₂O)₇-C₁₇H₃₅,
O-(CH (CH₃) -CH₂O)-C₁₇H₃₅, O-(CH (CH₃)-CH₂O)₂-C₁₇H₃₅, O-(CH (CH₃) -CH₂O)₃-C₁₇H₃₅, O- (CH (CH₃) -CH₂O)₄-C₁₇H₃₅, O-(CH(CH₃)-CH₂O)₅-C₁₇H₃, O-(CH(CH₃)-CH₂O)₆-C₁₇H₃₅, O-(CH (CH₃) -CH₂O)₇-C₁₇H₃₅,
O-(CH₂-CH₂O)-C₁₈H₃₇, O-(CH₂-CH₂O)₂-C₁₈H₃₇, O-(CH₂-CH₂O)₃-C₁₈H₃₇, O-(CH₂-CH₂O)₄-C₁₈H₃₇, O-(CH₂-CH₂O)₅-C₁₈H₃₇, O-(CH₂-CH₂O)₆-C₁₈H₃₇, O-(CH₂-CH₂O)₇-C₁₈H₃₇,
O-(CH (CH₃) -CH₂O)-C₁₈H₃₇, O- (CH (CH₃) -CH₂O)₂-C₁₈H₃₇, O-(CH (CH₃) -CH₂O)₃-C₁₈H₃₇, O- (CH (CH₃)-CH₂O)₄-C₁₈H₃₇, O-(CH (CH₃)-CH₂O)₅-C₁₈H₃₇, O-(CH (CH₃) -CH₂O)₆-C₁₈H₃₇, O-(CH (CH₃) -CH₂O)₇-C₁₈H₃₇,
O-(CH₂-CH₂O) -C₆H₄-C₉H₁₉, O-(CH₂-CH₂O)₂--C₆H₄-C₉H₁₉, O- (CH₂-CH₂O)₃-C₆H₄-C₉H₁₉, O-(CH₂-CH₂O)₄--C₆H₄-C₉H₁₉, O-(CH₂-CH₂O)₅-C₆H₄-C₉H₁₉, O-(CH₂-CH₂O)₆-C₆H₄-C₉H₁₉, O-(CH₂-CH₂O)₇-C₆H₄-C₉H₁₉,
O-(CH(CH₃)-CH₂O)-C₆H₄-C₉H₁₉, O- (CH (CH₃) -CH₂O)₂-C₆H₄-C₉H₁₉, O- (CH (CH₃) -CH₂O)₃-C₆H₄-C₉H₁₉, O- (CH (CH₃) -CH₂O)₄-C₆H₄-C₉H₁₉, 0- (CH (CH₃) -CH₂O)₅-C₆H₄-C₉H₁₉, O- (CH (CH₃) -CH₂O)₆-C₆H₄-C₉H₁₉ oder O-(CH (CH₃) -CH₂O)-₇-C₆H₄-C₉H₁₉ sein, wobei die Kohlenwasserstoffketten verzweigt oder unverzweigt sein können.

Die Alkylpolyethergruppe O-((CR^{II}₂)_{w}-O-)ᵥAlk kann keine -O-CH₂-CH₂O-CH₃-Gruppe sein.

Die Alkylpolyethergruppe X gleich O-((CR^{II}₂)_{w}-O-)ᵥ Alk kann mehr als 6, bevorzugt mehr als 8, besonders bevorzugt mehr als 10, Kohlenstoffatome enthalten.

Die Alkylpolyethergruppe X gleich O-((CH₂-CH₂-O-)ᵤ -Alk kann mehr als 6, bevorzugt mehr als 8, besonders bevorzugt mehr als 10, Kohlenstoffatome enthalten.

Die Alkylpolyethergruppe X gleich O-((CH₂-CH₂-O-)ᵣ-Alk kann mehr als 7, bevorzugt mehr als 10, besonders bevorzugt mehr als 12, Kohlenstoffatome enthalten.

(Mercaptoorganyl)alkylpolyethersilane der allgemeinen Formel I können sein:
[(C₄H₉O-(CH₂-CH₂O)₂](Me)₂Si(CH₂)₃SH,
[(C₄H₉O-(CH₂-CH₂O)₃](Me)₂Si(CH₂)₃SH,
[(C₄H₉O-(CH₂-CH₂O)₄](Me)₂Si(CH₂)₃SH,
[(C₄H₉O-(CH₂-CH₂O)₅](Me)₂Si(CH₂)₃SH,
[(C₄H₉O-(CH₂-CH₂O)₆](Me)₂Si(CH₂)₃SH,

[(C₅H₁₁O-(CH₂-CH₂O)₂](Me)₂Si(CH₂)₃SH,
[(C₅H₁₁O-(CH₂-CH₂O)₃](Me)₂Si(CH₂)₃SH,
[(C₅H₁₁O-(CH₂-CH₂O)₄](Me)₂Si(CH₂)₃SH,
[(C₅H₁₁O-(CH₂-CH₂O)₅](Me)₂Si(CH₂)₃SH,
[(C₅H₁₁O-(CH₂-CH₂O)₆](Me)₂Si(CH₂)₃SH,

[(C₆H₁₃O-(CH₂-CH₂O)₂](Me)₂Si(CH₂)₃SH,
[(C₆H₁₃O-(CH₂-CH₂O)₃](Me)₂Si(CH₂)₃SH,
[(C₆H₁₃O-(CH₂-CH₂O)₉](Me)₂Si(CH₂)₃SH,
[(C₆H₁₃O-(CH₂-CH₂O)₅](Me)₂Si(CH₂)₃SH,
[(C₆H₁₃O-(CH₂-CH₂O)₆](Me)₂Si(CH₂)₃SH,

[(C₇H₁₅O-(CH₂-CH₂O)₂](Me)₂Si(CH₂)₃SH,
[(C₇H₁₅O-(CH₂-CH₂O)₃](Me)₂Si(CH₂)₃SH,
[(C₇H₁₅O-(CH₂-CH₂O)₄](Me)₂Si(CH₂)₃SH,
[(C₇H₁₅O-(CH₂-CH₂O)₅](Me)₂Si(CH₂)₃SH,
[(C₇H₁₅O-(CH₂-CH₂O)₆](Me)₂Si(CH₂)₃SH,

[(C₈H₁₇O-(CH₂-CH₂O)₂](Me)₂Si(CH₂)₃SH,
[(C₈H₁₇O-(CH₂-CH₂O)₃](Me)₂Si(CH₂)₃SH,
(C₈H₁₇O-(CH₂-CH₂O)₄](Me)₂Si(CH₂)₃SH,
[(C₈H₁₇O-(CH₂-CH₂O)₅](Me)₂Si(CH₂)₃SH,
[(C₈H₁₇O-(CH₂-CH₂O)₆](Me)₂Si(CH₂)₃SH,

[(C₉H₁₉O-(CH₂-CH₂O)₂](Me)₂Si(CH₂)₃SH,
[(C₉H₁₉O-(CH₂-CH₂O)₃](Me)₂Si(CH₂)₃SH,
[(C₉H₁₉O-(CH₂-CH₂O)₄](Me)₂Si(CH₂)₃SH,
[(C₉H₁₉O-(CH₂-CH₂O)₅](Me)₂Si(CH₂)₃SH,
[(C₉H₁₉O-(CH₂-CH₂O)₆](Me)₂Si(CH₂)₃SH,

[(C₄H₉O-(CH₂-CH₂O)₂](Me)Si(CH₂)₃SH,
[(C₄H₉O-(CH₂-CH₂O)₃]₂(Me)Si(CH₂)₃SH,
[(C₄H₉O-(CH₂-CH₂O)₄]₂(Me)Si(CH₂)₃SH,
[(C₄H₉O-(CH₂-CH₂O)₅]₂(Me)Si(CH₂)₃SH,
[(C₄H₉O-(CH₂-CH₂O)₆]₂(Me)Si(CH₂)₃SH,

[(C₅H₁₁O-(CH₂-CH₂O)₂]₂ (Me)Si(CH₂)₃SH,
[(C₅H₁₁O-(CH₂-CH₂O)₃]₂(Me)Si(CH₂)₃SH,
[(C₅H₁₁O-(CH₂-CH₂O)₄]₂(Me)Si(CH₂)₃SH,
[(C₅H₁₁O-(CH₂-CH₂) ₅]₂(Me)Si(CH₂)₃SH,
[(C₅H₁₁O-(CH₂-CH₂O)₆]₂(Me)Si(CH₂)₃SH,

[(C₆H₁₃O-(CH₂-CH₂O)₂]₂(Me)Si(CH₂)₃SH,
[(C₆H13O-(CH₂-CH₂O)₃]₂(Me)Si(CH₂)₃SH,
[(C₆H₁₃O-(CH₂-CH₂O)₄]₂(Me)Si(CH₂)₃SH,
[(C₆H₁₃O-(CH₂-CH₂O)₅]₂(Me)Si(CH₂)₃SH,
(C₆H₁₃O-(CH₂-CH₂O)₆]₂(Me)Si(CH₂)₃SH,

[(C₇H₁₅O-(CH₂-CH₂O)₂]₂(Me)Si(CH₂)₃SH,
[(C₇H₁₅O-(CH₂-CH₂)₃]₂(Me)Si(CH₂)₃SH,
[(C₇H₁₅O-(CH₂-CH₂O)₄]₂(Me)Si(CH₂)₃SH,
[(C₇H₁₅O-(CH₂-CH₂O)₅]₂(Me)Si(CH₂)₃SH,
[(C₇H₁₅O-(CH₂-CH₂O)₆]₂(Me)Si(CH₂)₃SH,

[(C₈H₁₇O-(CH₂-CH₂O)₂]₂(Me)Si(CH₂)₃SH,
[(C₈H₁₇O-(CH₂-CH₂O)₃]₂(Me)Si(CH₂)₃SH,
[(C₈H₁₇O-(CH₂-CH₂O)₄]₂(Me)Si(CH₂)₃SH,
[(C₈H₁₇O-(CH₂-CH₂O)₅]₂(Me)Si(CH₂)₃SH,
[(C₈H₁₇O-(CH₂-CH₂O)₆]₂(Me)Si(CH₂)₃SH,

[(C₉H₁₉O-(CH₂-CH₂O)₂]₂(Me)Si(CH₂)₃SH,
[(C₉H₁₉O-(CH₂-CH₂O)₃]₂(Me)Si(CH₂)₃SH,
[(C₉H₁₉O-(CH₂-CH₂O)₄]₂(Me)Si(CH₂)₃SH,
[(C₉H₁₉O-(CH₂-CH₂O)₅]₂(Me)Si(CH₂)₃SH,
[(C₉H₁₉O-(CH₂-CH₂O)₆]₂(Me)Si(CH₂)₃SH,

[(C₄H₉O-(CH₂-CH₂O)₂](Me)(EtO)Si(CH₂)₃SH,
[(C₄H₉O-(CH₂-CH₂O)₃](Me)(EtO)Si(CH₂)₃SH,
[(C₄H₉O-(CH₂-CH₂O)₄](Me)(EtO)Si(CH₂)₃SH,
[(C₄H₉O-(CH₂-CH₂O)₅](Me)(EtO)Si(CH₂)₃SH,
[(C₄H₉O-(CH₂-CH₂O)₆](Me)(EtO)Si(CH₂)₃SH,

[(C₅H₁₁O-(CH₂-CH₂O)₂](Me)(EtO)Si(CH₂)₃SH,
[(C₅H₁₁O-(CH₂-CH₂O)₃](Me)(EtO)Si(CH₂)₃SH,
[(C₅H₁₁O-(CH₂-CH₂O)₄](Me)(EtO)Si(CH₂)₃SH,
[(C₅H₁₁O-(CH₂-CH₂O)₅](Me)(EtO)Si(CH₂)₃SH,
[(C₅H₁₁O-(CH₂-CH₂O)₆](Me)(EtO)Si(CH₂)₃SH,

[(C₆H₁₃O-(CH₂-CH₂O)₂](Me)(EtO)Si(CH₂)₃SH,
[(C₆H₁₃O-(CH₂-CH₂O)₃](Me)(EtO)Si(CH₂)₃SH,
[(C₆H₁₃O-(CH₂-CH₂O)₄](Me)(EtO)Si(CH₂)₃SH,
[(C₆H₁₃O-(CH₂-CH₂O)₅](Me)(EtO)Si(CH₂)₃SH,
[(C₆H₁₃O-(CH₂-CH₂O)₆](Me)(EtO)Si(CH₂)₃SH,

[(C₇H₁₅O-(CH₂-CH₂O)₂](Me)(EtO)Si(CH₂)₃SH,
[(C₇H₁₅O-(CH₂-CH₂O)₃](Me)(EtO)Si(CH₂)₃SH,
[(C₇H₁₅O-(CH₂-CH₂O)₄](Me)(EtO)Si(CH₂)₃SH,
[(C₇H₁₅O-(CH₂-CH₂O)₅](Me)(EtO)Si(CH₂)₃SH,
[(C₇H₁₅O-(CH₂-CH₂O)₆](Me)(EtO)Si(CH₂)₃SH,

[(C₈H₁₇O-(CH₂-CH₂O)₂](Me)(EtO)Si(CH₂)₃SH,
[(C₈H₁₇O-(CH₂-CH₂O)₃](Me)(EtO)Si(CH₂)₃SH,
[(C₈H₁₇O-(CH₂-CH₂O)₄](Me)(EtO)Si(CH₂)₃SH,
[(C₈H₁₇O-(CH₂-CH₂O)₅](Me)(EtO)Si(CH₂)₃SH,
[(C₈H₁₇O-(CH₂-CH₂O)₆](Me)(EtO)Si(CH₂)₃SH,

[(C₉H₁₉O-(CH₂-CH₂O)₂](Me)(EtO)Si(CH₂)₃SH,
[(C₉H₁₉O-(CH₂-CH₂O)₃](Me)(EtO)Si(CH₂)₃SH,
[(C₉H₁₉O-(CH₂-CH₂O)₄](Me)(EtO)Si(CH₂)₃SH,
[(C₉H₁₉O-(CH₂-CH₂O)₅](Me)(EtO)Si(CH₂)₃SH,
[(C₉H₁₉O-(CH₂-CH₂O)₆](Me)(EtO)Si(CH₂)₃SH,

[(C₁₀H₂₁O-(CH₂-CH₂O)₂](Me)(EtO)Si(CH₂)₃SH,
[(C₁₀H₂₁O-(CH₂-CH₂O)₃](Me)(EtO)Si(CH₂)₃SH,
[(C₁₀H₂₁O-(CH₂-CH₂O)₄](Me)(EtO)Si(CH₂)₃SH,
[(C₁₀H₂₁O-(CH₂-CH₂O)₅](Me)(EtO)Si(CH₂)₃SH,
[(C₁₀H₂₁O-(CH₂-CH₂O)₆](Me)(EtO)Si(CH₂)₃SH,

[(C₁₁H₂₃O-(CH₂-CH₂O)₂](Me)(EtO)Si(CH₂)₃SH,
[(C₁₁H₂₃O-(CH₂-CH₂O)₃](Me)(EtO)Si(CH₂)₃SH,
[(C₁₁H₂₃O-(CH₂-CH₂O)₄](Me)(EtO)Si(CH₂)₃SH,
[(C₁₁H₂₃O-(CH₂-CH₂O)₅](Me)(EtO)Si(CH₂)₃SH,
[(C₁₁H₂₃O-(CH₂-CH₂O)₆](Me)(EtO)Si(CH₂)₃SH,

[(C₁₂H₂₅O-(CH₂-CH₂O)₂](Me)(EtO)Si(CH₂)₃SH,
[(C₁₂H₂₅O-(CH₂-CH₂O)₃](Me)(EtO)Si(CH₂)₃SH,
[(C₁₂H₂₅O-(CH₂-CH₂O)₄](Me)(EtO)Si(CH₂)₃SH,
[(C₁₂H₂₅O-(CH₂-CH₂O)₅](Me)(EtO)Si(CH₂)₃SH,
[(C₁₂H₂₅O-(CH₂-CH₂O)₆](Me)(EtO)Si(CH₂)₃SH,

[(C₁₃H₂₇O-(CH₂-CH₂O)₂](Me)(EtO)Si(CH₂)₃SH,
[(C₁₃H₂₇O-(CH₂-CH₂O)₃](Me)(EtO)Si(CH₂)₃SH,
[(C₁₃H₂₇O-(CH₂-CH₂O)₄](Me)(EtO)Si(CH₂)₃SH,
[(C₁₃H₂₇O-(CH₂-CH₂O)₅](Me)(EtO)Si(CH2)₃SH,
[(C₁₃H₂₇O-(CH₂-CH₂O)₆](Me)(EtO)Si(CH₂)₃SH,

[(C₁₄H₂₉O-(CH₂-CH₂O)₂](Me)(EtO)Si(CH₂)₃SH,
[(C₁₄H₂₉O-(CH₂-CH₂O)₃](Me)(EtO)Si(CH₂)₃SH,
[(C₁₄H₂₉O-(CH₂-CH₂O)₄](Me)(EtO)Si(CH₂)₃SH,
[(C₁₄H₂₉O-(CH₂-CH₂O)₅](Me)(EtO)Si(CH₂)₃SH,
[(C₁₄H₂₉O-(CH₂-CH₂O)₆](Me)(EtO)Si(CH₂)₃SH,

[(C₁₅H₃₁O-(CH₂-CH₂O)₂](Me)(EtO)Si(CH₂)₃SH,
[(C₁₅H₃₁O-(CH₂-CH₂O)₃](Me)(EtO)Si(CH₂)₃SH,
[(C₁₅H₃₁O-(CH₂-CH₂O)₄](Me)(EtO)Si(CH₂)₃SH,
[(C₁₅H₃₁O-(CH₂-CH₂O)₅](Me)(EtO)Si(CH₂)₃SH,
[(C₁₅H₃₁O-(CH₂-CH₂O)₆](Me)(EtO)Si(CH₂)₃SH,

[(C₁₆H₃₃O-(CH₂-CH₂O)₂](Me)(EtO)Si(CH₂)₃SH,
[(C₁₆H₃₃O-(CH₂-CH₂O)₃](Me)(EtO)Si(CH₂)₃SH,
[(C₁₆H₃₃O-(CH₂-CH₂O)₄](Me)(EtO)Si(CH₂)₃SH,
[(C₁₆H₃₃O-(CH₂-CH₂O)₅](Me)(EtO)Si(CH₂)₃SH,
[(C₁₆H₃₃O-(CH₂-CH₂O)₆](Me)(EtO)Si(CH₂)₃SH,

[(C₁₇H₃₅O-(CH₂-CH₂O)₂](Me)(EtO)Si(CH₂)₃SH,
[(C₁₇H₃₅O-(CH₂-CH₂O)₃](Me)(EtO)Si(CH₂)₃SH,
[(C₁₇H₃₅O-(CH₂-CH₂O)₄](Me)(EtO)Si(CH₂)₃SH,
[(C₁₇H₃₅O-(CH₂-CH₂O)₅](Me)(EtO)Si(CH₂)₃SH,
[(C₁₇H₃₅O-(CH₂-CH₂O)₆](Me)(EtO)Si(CH₂)₃SH,

[(C₁₈H₃₇O-(CH₂-CH₂O)₂](Me)(EtO)Si(CH₂)₃SH,
[(C₁₈H₃₇O-(CH₂-CH₂O)₃](Me)(EtO)Si(CH₂)₃SH,
[(C₁₈H₃₇O-(CH₂-CH₂O)₄](Me)(EtO)Si(CH₂)₃SH,
[(C₁₈H₃₇O-(CH₂-CH₂O)₅](Me)(EtO)Si(CH₂)₃SH,
[(C₁₈H₃₇O-(CH₂-CH₂O)₆](Me)(EtO)Si(CH₂)₃SH,
[(C₄H₉O-(CH₂-CH₂O)₂](Me)(MeO)Si(CH₂)₃SH,

[(C₄H₉O-(CH₂-CH₂O)₃](Me)(MeO)Si(CH₂)₃SH,
[(C₄H₉O-(CH₂-CH₂O)₄](Me)(MeO)Si(CH₂)₃SH,
[(C₄H₉O-(CH₂-CH₂O)₅](Me)(MeO)Si(CH₂)₃SH,
[(C₄H₉O-(CH₂-CH₂O)₆](Me)(MeO)Si(CH₂)₃SH,

[(C₅H₁₁O-(CH₂-CH₂O)₂](Me)(MeO)Si(CH₂)₃SH,
[(C₅H₁₁O-(CH₂-CH₂O)₃](Me)(MeO)Si(CH₂)₃SH,
[(C₅H₁₁O-(CH₂-CH₂O)₄](Me)(MeO)Si(CH₂)₃SH,
[(C₅H₁₁O-(CH₂-CH₂O)₅](Me)(MeO)Si(CH₂)₃SH,
[(C₅H₁₁O-(CH₂-CH₂O)₆](Me)(MeO)Si(CH₂)₃SH,

[(C₆H₁₃O-(CH₂-CH₂O)₂](Me)(MeO)Si(CH₂)₃SH,
[(C₆H₁₃O-(CH₂-CH₂O)₃](Me)(MeO)Si(CH₂)₃SH,
[(C₆H₁₃O-(CH₂-CH₂O)₄](Me)(MeO)Si(CH₂)₃SH,
[(C₆H₁₃O-(CH₂-CH₂O)₅](Me)(MeO)Si(CH₂)₃SH,
[(C₆H₁₃O-(CH₂-CH₂O)₆](Me)(MeO)Si(CH₂)₃SH,

[(C₇H₁₅O-(CH₂-CH₂O)₂](Me)(MeO)Si(CH₂)₃SH,
[(C₇H₁₅O-(CH₂-CH₂O)₃](Me)(MeO)Si(CH₂)₃SH,
[(C₇H₁₅O-(CH₂-CH₂O)₄](Me)(MeO)Si(CH₂)₃SH,
[(C₇H₁₅O-(CH₂-CH₂O)₅](Me)(MeO)Si(CH₂)₃SH,
[(C₇H₁₅O-(CH₂-CH₂O)₆](Me)(MeO)Si(CH₂)₃SH,

[(C₈H₁₇O-(CH₂-CH₂O)₂](Me)(MeO)Si(CH₂)₃SH,
[(C₈H₁₇O-(CH₂-CH₂O)₃](Me)(MeO)Si(CH₂)₃SH,
[(C₈H₁₇O-(CH₂-CH₂O)₄](Me)(MeO)Si(CH₂)₃SH,
[(C₈H₁₇O-(CH₂-CH₂O)₅](Me)(MeO)Si(CH₂)₃SH,
[(C₈H₁₇O-(CH₂-CH₂O)₆](Me)(MeO)Si(CH₂)₃SH,

[(C₉H₁₉O-(CH₂-CH₂O)₂](Me)(MeO)Si(CH₂)₃SH,
[(C₉H₁₉O-(CH₂-CH₂O)₃](Me)(MeO)Si(CH₂)₃SH,
[(C₉H₁₉O-(CH₂-CH₂O)₄](Me)(MeO)Si(CH₂)₃SH,
[(C₉H₁₉O-(CH₂-CH₂O)₅](Me)(MeO)Si(CH₂)₃SH,
[(C₉H₁₉O-(CH₂-CH₂O)₆](Me)(MeO)Si(CH₂)₃SH,

[(C₄H₉O-(CH₂-CH₂O)₂](MeO)₂Si(CH₂)₃SH,
[(C₄H₉O-(CH₂-CH₂O)₃](MeO)₂Si(CH₂)₃SH,
[(C₄H₉O-(CH₂-CH₂O)₄](MeO)₂Si(CH₂)₃SH,
[(C₄H₉O-(CH₂-CH₂O)₅](MeO)₂Si(CH₂)₃SH,
[(C₄H₉O-(CH₂-CH₂O)₆](MeO)₂Si(CH₂)₃SH,

[(C₅H₁₁O-(CH₂-CH₂O)₂](MeO)₂Si(CH₂)₃SH,
[(C₅H₁₁O-(CH₂-CH₂O)₃](MeO)₂Si(CH₂)₃SH,
[(C₅H₁₁O-(CH₂-CH₂O)₄](MeO)₂Si(CH₂)₃SH,
[(C₅H₁₁O-(CH₂-CH₂O)₅](MeO)₂Si(CH₂)₃SH,
[(C₅H₁₁O-(CH₂-CH₂O)₆](MeO)₂Si(CH₂)₃SH,

[(C₆H₁₃O-(CH₂-CH₂O)₂](MeO)₂Si(CH₂)₃SH,
[(C₆H₁₃O-(CH₂-CH₂O)₃](MeO)₂Si(CH₂)₃SH,
[(C₆H₁₃O-(CH₂-CH₂O)₄](MeO)₂Si(CH₂)₃SH,
[(C₆H₁₃O-(CH₂-CH₂O)₅](MeO)₂Si(CH₂)₃SH,
[(C₆H₁₃O-(CH₂-CH₂O)₆](MeO)₂Si(CH₂)₃SH,

[(C₇H₁₅O-(CH₂-CH₂O)₂](MeO)₂Si(CH₂)₃SH,
[(C₇H₁₅O-(CH₂-CH₂O)₃](MeO)₂Si(CH₂)₃SH,
[(C₇H₁₅O-(CH₂-CH₂O)₄](MeO)₂Si(CH₂)₃SH,
[(C₇H₁₅O-(CH₂-CH₂O)₅](MeO)₂Si(CH₂)₃SH,
[(C₇H₁₅O-(CH₂-CH₂O)₅](MeO)₂Si(CH₂)₃SH,

[(C₈H₁₇O-(CH₂-CH₂O)₂](MeO)₂Si(CH₂)₃SH,
[(C₈H₁₇O-(CH₂-CH₂O)₃](MeO)₂Si(CH₂)₃SH,
[(C₈H₁₇O-(CH₂-CH₂O)₄](MeO)₂Si(CH₂)₃SH,
[(C₈H₁₇O-(CH₂-CH₂O)₅](MeO)₂Si(CH₂)₃SH,
[(C₈H₁₇O-(CH₂-CH₂O)₆](MeO)₂Si(CH₂)₃SH,

[(C₉H₁₉O-(CH₂-CH₂O)₂](MeO)₂Si(CH₂)₃SH,
[(C₉H₁₉O-(CH₂-CH₂O)₃](MeO)₂Si(CH₂)₃SH,
[(C₉H₁₉O-(CH₂-CH₂O)₄](MeO)₂Si(CH₂)₃SH,
[(C₉H₁₉O-(CH₂-CH₂O)₅](MeO)₂Si(CH₂)₃SH,
[(C₉H₁₉O-(CH₂-CH₂O)₆](MeO)₂Si(CH₂)₃SH,

[(C₁₀H₂₁O-(CH₂-CH₂O)₂](MeO)₂Si(CH₂)₃SH,
[(C₁₀H₂₁O-(CH₂-CH₂O)₃](MeO)₂Si(CH₂)₃SH,
[(C₁₀H₂₁O-(CH₂-CH₂O)₄](MeO)₂Si(CH₂)₃SH,
[(C₁₀H₂₁O-(CH₂-CH₂O)₅](MeO)₂Si(CH₂)₃SH,
[(C₁₀H₂₁O-(CH₂-CH₂O)₆](MeO)₂Si(CH₂)₃SH,

[(C₁₁H₂₃O-(CH₂-CH₂O)₂](MeO)₂Si(CH₂)₃SH,
[(C₁₁H₂₃O-(CH₂-CH₂O)₃](MeO)₂Si(CH₂)₃SH,
[(C₁₁H₂₃O-(CH₂-CH₂O)₄](MeO)₂Si(CH₂)₃SH,
[(C₁₁H₂₃O-(CH₂-CH₂O)₅](MeO)₂Si(CH₂)₃SH,
[(C₁₁H₂₃O-(CH₂-CH₂O)₆](MeO)₂Si(CH₂)₃SH,

[(C₁₂H₂₅O-(CH₂-CH₂O)₂](MeO)₂Si(CH₂)₃SH,
[(C₁₂H₂₅O-(CH₂-CH₂O)₃](MeO)₂Si(CH₂)₃SH,
[(C₁₂H₂₅O-(CH₂-CH₂O)₄](MeO)₂Si(CH₂)₃SH,
[(C₁₂H₂₅O-(CH₂-CH₂O)₅](MeO)₂Si(CH₂)₃SH,
[(C₁₂H₂₅O-(CH₂-CH₂O)₆](MeO)₂Si(CH₂)₃SH,

[(C₁₃H₂₇O-(CH₂-CH₂O)₂](MeO)₂Si(CH₂)₃SH,
[(C₁₃H₂₇O-(CH₂-CH₂O)₃](MeO)₂Si(CH₂)₃SH,
[(C₁₃H₂₇O-(CH₂-CH₂O)₄](MeO)₂Si(CH₂)₃SH,
[(C₁₃H₂₇O-(CH₂-CH₂O)₅](MeO)₂Si(CH₂)₃SH,
[(C₁₃H₂₇O-(CH₂-CH₂O)₆](MeO)₂Si(CH₂)₃SH,

[(C₁₄H₂₉O-(CH₂-CH₂O)₂](MeO)₂Si(CH₂)₃SH,
[(C₁₉H₂₉O-(CH₂-CH₂O)₃](MeO)₂Si(CH₂)₃SH,
[(C₁₄H₂₉O-(CH₂-CH₂O)₄](MeO)₂Si(CH₂)₃SH,
[(C₁₄H₂₉O-(CH₂-CH₂O)₅](MeO)₂Si(CH₂)₃SH,
[(C₁₄H₂₉O-(CH₂-CH₂O)₆](MeO)₂Si(CH₂)₃SH,

[(C₁₆H₃₃O-(CH₂-CH₂O)₂](MeO)₂Si(CH₂)₃SH,
[(C₁₆H₃₃O-(CH₂-CH₂O)₃](MeO)₂Si(CH₂)₃SH,
[(C₁₆H₃₃O-(CH₂-CH₂O)₄](MeO)₂Si(CH₂)₃SH,
[(C₁₆H₃₃O-(CH₂-CH₂O)₅](MeO)₂Si(CH₂)₃SH,
[(C₁₆H₃₃O-(CH₂-CH₂O)₆](MeO)₂Si(CH₂)₃SH,

[(C₁₈H₃₇O-(CH₂-CH₂O)₂](MeO)₂Si(CH₂)₃SH,
[(C₁₈H₃₇O-(CH₂-CH₂O)₃](MeO)₂Si(CH₂)₃SH,
[(C₁₈H₃₇O-(CH₂-CH₂O)₄](MeO)₂Si(CH₂)₃SH,
[(C₁₈H₃₇O-(CH₂-CH₂O)₅](MeO)₂Si(CH₂)₃SH,
[(C₁₈H₃₇O-(CH₂-CH₂O)₆](MeO)₂Si(CH₂)₃SH,

[(C₉H₁₉O-(CH₂-CH₂O)₂]₂(MeO)Si(CH₂)₃SH,
[(C₉H₁₉O-(CH₂-CH₂O)₃]₂(MeO)Si(CH₂)₃SH,
[(C₉H₁₉O-(CH₂-CH₂O)₄]₂(MeO)Si(CH₂)₃SH,
[(C₉H₁₉O-(CH₂-CH₂O)₅]₂(MeO)Si(CH₂)₃SH,
[(C₉H₁₉O-(CH₂-CH₂O)₆]₂(MeO)Si(CH₂)₃SH,

[(C₁₂H₂₅O-(CH₂-CH₂O)₂]₂(MeO)Si(CH₂)₃SH,
[(C₁₂H₂₅O-(CH₂-CH₂O)₃]₂(MeO)Si(CH₂)₃SH,
[(C₁₂H₂₅O-(CH₂-CH₂O)₄]₂(MeO)Si(CH₂)₃SH,
[(C₁₂H₂₅O-(CH₂-CH₂O)₅]₂(MeO)Si(CH₂)₃SH,
[(C₁₂H₂₅O-(CH₂-CH₂O)₆]₂(MeO)Si(CH₂)₃SH,

[(C₁₃H₂₇O-(CH₂-CH₂O)₂]₂(MeO)Si(CH₂)₃SH,
[(C₁₃H₂₇O-(CH₂-CH₂O)₃]₂(MeO)Si(CH₂)₃SH,
[(C₁₃H₂₇O-(CH₂-CH₂O)₄]₂(MeO)Si(CH₂)₃SH,
[(C₁₃H₂₇O-(CH₂-CH₂O)₅]₂(MeO)Si(CH₂)₃SH,
[(C₁₃H₂₇O-(CH₂-CH₂O)₆]₂(MeO)Si(CH₂)₃SH,

[(C₁₄H₂₉O-(CH₂-CH₂O)₂]₂(MeO)Si(CH₂)₃SH,
[(C₁₄H₂₉O-(CH₂-CH₂O)₃]₂(MeO)Si(CH₂)₃SH,
[(C₁₉H₂₉O-(CH₂-CH₂O)₄]₂(MeO)Si(CH₂)₃SH,
[(C₁₄H₂₉O-(CH₂-CH₂O)₅]₂(MeO)Si(CH₂)₃SH,
[(C₁₄H₂₉O-(CH₂-CH₂O)₆]₂(MeO)Si(CH₂)₃SH,

[(C₁₆H₃₃O-(CH₂-CH₂O)₂]₂(MeO)Si(CH₂)₃SH,
[(C₁₆H₃₃O-(CH₂-CH₂O)₃]₂(MeO)Si(CH₂)₃SH,
[(C₁₆H₃₃O-(CH₂-CH₂O)₄]₂(MeO)Si(CH₂)₃SH,
[(C₁₆H₃₃O-(CH₂-CH₂O)₅]₂(MeO)Si(CH₂)₃SH,
[(C₁₆H₃₃O-(CH₂-CH₂O)₆]₂(MeO)Si(CH₂)₃SH,

[(C₁₈H₃₇O-(CH₂-CH₂O)₂]₂(MeO)Si(CH₂)₃SH,
[(C₁₈H₃₇O-(CH₂-CH₂O)₃]₂(MeO)Si(CH₂)₃SH,
[(C₁₈H₃₇O-(CH₂-CH₂O)₄]₂(MeO)Si(CH₂)₃SH,
[(C₁₈H₃₇O-(CH₂-CH₂O)₅]₂(MeO)Si(CH₂)₃SH,
[(C₁₈H₃₇O-(CH₂-CH₂O)₆]₂(MeO)Si(CH₂)₃SH,

[(C₄H₉O-(CH₂-CH₂O)₂](EtO)₂Si(CH₂)₃SH,
[(C₄H₉O-(CH₂-CH₂O)₃](EtO)₂Si(CH₂)₃SH,
[(C₄H₉O-(CH₂-CH₂O)₄](EtO)₂Si(CH₂)₃SH,
[(C₄H₉O-(CH₂-CH₂O)₅](EtO)₂Si(CH₂)₃SH,
[(C₄H₉O-(CH₂-CH₂O)₆](EtO)₂Si(CH₂)₃SH,

[(C₅H₁₁O-(CH₂-CH₂O)₂](EtO)₂Si(CH₂)₃SH,
[(C₅H₁₁O-(CH₂-CH₂O)₃](EtO)₂Si(CH₂)₃SH,
[(C₅H₁₁O-(CH₂-CH₂O)₄](EtO)₂Si(CH₂)₃SH,
[(C₅H₁₁O-(CH₂-CH₂O)₅](EtO)₂Si(CH₂)₃SH,
[(C₅H₁₁O-(CH₂-CH₂O)₆](EtO)₂Si(CH₂)₃SH,

[(C₆H₁₃O-(CH₂-CH₂O)₂](EtO)₂Si(CH₂)₃SH,
[(C₆H₁₃O-(CH₂-CH₂O)₃](EtO)₂Si(CH₂)₃SH,
[(C₆H₁₃O-(CH₂-CH₂O)₄](EtO)₂Si(CH₂)₃SH,
[(C₆H₁₃O-(CH₂-CH₂O)₅](EtO)₂Si(CH₂)₃SH,
[(C₆H₁₃O-(CH₂-CH₂O)₆](EtO)₂Si(CH₂)₃SH,

[(C₇H₁₅O-(CH₂-CH₂O)₂](EtO)₂Si(CH₂)₃SH,
[(C₇H₁₅O-(CH₂-CH₂O)₃](EtO)₂Si(CH₂)₃SH,
[(C₇H₁₅O-(CH₂-CH₂O)₄](EtO)₂Si(CH₂)₃SH,
[(C₇H₁₅O-(CH₂-CH₂O)₅](EtO)₂Si(CH₂)₃SH,
[(C₇H₁₅O-(CH₂-CH₂O)₆](EtO)₂Si(CH₂)₃SH,

[(C₈H₁₇O-(CH₂-CH₂O)₂](EtO)₂Si(CH₂)₃SH,
[(C₈H₁₇O-(CH₂-CH₂O)₃](EtO)₂Si(CH₂)₃SH,
[(C₈H₁₇O-(CH₂-CH₂O)₄](EtO)₂Si(CH₂)₃SH,
[(C₈H₁₇O-(CH₂-CH₂O)₅](EtO)₂Si(CH₂)₃SH,
[(C₈H₁₇O-(CH₂-CH₂O)₆](EtO)₂Si(CH₂)₃SH,

[(C₉H₁₉O-(CH₂-CH₂O)₂](EtO)₂Si(CH₂)₃SH,
[(C₉H₁₉O-(CH₂-CH₂O)₃](EtO)₂Si(CH₂)₃SH,
[(C₉H₁₉O-(CH₂-CH₂O)₄](EtO)₂Si(CH₂)₃SH,
[(C₉H₁₉O-(CH₂-CH₂O)₅](EtO)₂Si(CH₂)₃SH,
[(C₉H₁₉O-(CH₂-CH₂O)₆](EtO)₂Si(CH₂)₃SH,

[(C₁₀H₂₁O-(CH₂-CH₂O)₂](EtO)₂Si(CH₂)₃SH,
[(C₁₀H₂₁O-(CH₂-CH₂O)₃](EtO)₂Si(CH₂)₃SH,
[(C₁₀H₂₁O-(CH₂-CH₂O)₄](EtO)₂Si(CH₂)₃SH,
[(C₁₀H₂₁O-(CH₂-CH₂O)₅](EtO)₂Si(CH₂)₃SH,
[(C₁₀H₂₁O-(CH₂-CH₂O)₆](EtO)₂Si(CH₂)₃SH,

[(C₁₁H₂₃O-(CH₂-CH₂O)₂](EtO)₂Si(CH₂)₃SH,
[(C₁₁H₂₃O-(CH₂-CH₂O)₃](EtO)₂Si(CH₂)₃SH,
[(C₁₁H₂₃O-(CH₂-CH₂O)₄](EtO)₂Si(CH₂)₃SH,
[(C₁₁H₂₃O-(CH₂-CH₂O)₅](EtO)₂Si(CH₂)₃SH,
[(C₁₁H₂₃O-(CH₂-CH₂O)₆](EtO)₂Si(CH₂)₃SH,

[(C₁₂H₂₅O-(CH₂-CH₂O)₂](EtO)₂Si(CH₂)₃SH,
[(C₁₂H₂₅O-(CH₂-CH₂O)₃](EtO)₂Si(CH₂)₃SH,
[(C₁₂H₂₅O-(CH₂-CH₂O)₄](EtO)₂Si(CH₂)₃SH,
[(C₁₂H₂₅O-(CH₂-CH₂O)₅](EtO)₂Si(CH₂)₃SH,
[(C₁₂H₂₅O-(CH₂-CH₂O)₆](EtO)₂Si(CH₂)₃SH,

[(C₁₃H₂₇O-(CH₂-CH₂O)₂](EtO)₂Si(CH₂)₃SH,
[(C₁₃H₂₇O-(CH₂-CH₂O)₃](EtO)₂Si(CH₂)₃SH,
[(C₁₃H₂₇O-(CH₂-CH₂O)₄](EtO)₂Si(CH₂)₃SH_{,}
[(C₁₃H₂₇O-(CH₂-CH₂O)₅](EtO)₂Si(CH₂)₃SH,
[(C₁₃H₂₇O-(CH₂-CH₂O)₆](EtO)₂Si(CH₂)₃SH,

[(C₁₄H₂₉O-(CH₂-CH₂O)₂](EtO)₂Si(CH₂)₃SH,
[(C₁₄H₂₉O-(CH₂-CH₂O)₃](EtO)₂Si(CH₂)₃SH,
(C₁₄H₂₉O-(CH₂-CH₂O)₄](EtO)₂Si(CH₂)₃SH,
[(C₁₄H₂₉O-(CH₂-CH₂O)₅](EtO)₂Si(CH₂)₃SH,
[(C₁₄H₂₉O-(CH₂-CH₂O)₆](EtO)₂Si(CH₂)₃SH,

[(C₁₆H₃₃O-(CH₂-CH₂O)₂](EtO)₂Si(CH₂)₃SH,
[(C₁₆H₃₃O-(CH₂-CH₂O)₃](EtO)₂Si(CH₂)₃SH,
[(C₁₆H₃₃O-(CH₂-CH₂O)₄](EtO)₂Si(CH₂)₃SH,
[(C₁₆H₃₃O-(CH₂-CH₂O)₅](EtO)₂Si(CH₂)₃SH,
[(C₁₆H₃₃O-(CH₂-CH₂O)₆](EtO)₂Si(CH₂)₃SH,

[(C₁₇H₃₅O-(CH₂-CH₂O)₂](EtO)₂Si(CH₂)₃SH,
[(C₁₇H₃₅O-(CH₂-CH₂O)₃](EtO)₂Si(CH₂)₃SH,
(C₁₇H₃₅O-(CH₂-CH₂O)₄](EtO)₂Si(CH₂)₃SH,
[(C₁₇H₃₅O-(CH₂-CH₂O)₅](EtO)₂Si(CH₂)₃SH,
[(C₁₇H₃₅O-(CH₂-CH₂O)₆](EtO)₂Si(CH₂)₃SH,

[(C₁₈H₃₇O-(CH₂-CH₂O)₂](EtO)₂Si(CH₂)₃SH,
[(C₁₈H₃₇O-(CH₂-CH₂O)₃](EtO)₂Si(CH₂)₃SH,
[(C₁₈H₃₇O-(CH₂-CH₂O)₄](EtO)₂Si(CH₂)₃SH,
[(C₁₈H₃₇O-(CH₂-CH₂O)₅](EtO)₂Si(CH₂)₃SH,
[(C₁₈H₃₇O-(CH₂-CH₂O)₆](EtO)₂Si(CH₂)₃SH,

[(C₉H₁₉O-(CH₂-CH₂O)₂]₂(EtO)Si(CH₂)₃SH,
[(C₉H₁₉O-(CH₂-CH₂O)₃]₂(EtO)Si(CH₂)₃SH,
[(C₉H₁₉O-(CH₂-CH₂O)₄]₂(EtO)Si(CH₂)₃SH,
[(C₉H₁₉O-(CH₂-CH₂O)₅]₂(EtO)Si(CH₂)₃SH,
[(C₉H₁₉O-(CH₂-CH₂O)₆]₂(EtO)Si(CH₂)₃SH,

[(C₁₂H₂₅O-(CH₂-CH₂O)₂]₂(EtO)Si(CH₂)₃SH,
[(C₁₂H₂₅O-(CH₂-CH₂O)₃]₂(EtO)Si(CH₂)₃SH,
[(C₁₂H₂₅O-(CH₂-CH₂O)₄]₂(EtO)Si(CH₂)₃SH,
[(C₁₂H₂₅O-(CH₂-CH₂O)₅]₂(EtO)Si(CH₂)₃SH,
[(C₁₂H₂₅O-(CH₂-CH₂O)₆]₂(EtO)Si(CH₂)₃SH,

[(C₁₃H₂₇O-(CH₂-CH₂O)₂]₂(EtO)Si(CH₂)₃SH,
[(C₁₃H₂₇O-(CH₂-CH₂O)₃]₂(EtO)Si(CH₂)₃SH,
[(C₁₃H₂₇O-(CH₂-CH₂O)₄]₂(EtO)Si(CH₂)₃SH,
[(C₁₃H₂₇O-(CH₂-CH₂O)₅]₂(EtO)Si(CH₂)₃SH,
[(C₁₃H₂₇O-(CH₂-CH₂O)₆]₂(EtO)Si(CH₂)₃SH,

[(C₁₄H₂₉O-(CH₂-CH₂O)₂]₂(EtO)Si(CH₂)₃SH,
[(C₁₄H₂₉O-(CH₂-CH₂O)₃]₂(EtO)Si(CH₂)₃SH,
[(C₁₄H₂₉O-(CH₂-CH₂O)₄]₂(EtO)Si(CH₂)₃SH,
[(C₁₄H₂₉O-(CH₂-CH₂O)₅]₂(EtO)Si(CH₂)₃SH,
[(C₁₄H₂₉O-(CH₂-CH₂O)₆]₂(EtO)Si(CH₂)₃SH,

[(C₁₆H₃₃O-(CH₂-CH₂O)₂]₂(EtO)Si(CH₂)₃SH,
[(C₁₆H₃₃O-(CH₂-CH₂O)₃]₂(EtO)Si(CH₂)₃SH,
[(C₁₆H₃₃O-(CH₂-CH₂O)₄]₂(EtO)Si(CH₂)₃SH,
[(C₁₆H₃₃O-(CH₂-CH₂O)₅]₂(EtO)Si(CH₂)₃SH,
[(C₁₆H₃₃O-(CH₂-CH₂O)₆]₂(EtO)Si(CH₂)₃SH,

[(C₁₇H₃₅O-(CH₂-CH₂O)₂]₂(EtO)Si(CH₂)₃SH,
[(C₁₇H₃₅O-(CH₂-CH₂O)₃]₂(EtO)Si(CH₂)₃SH,
[(C₁₇H₃₅O-(CH₂-CH₂O)₄]₂(EtO)Si(CH₂)₃SH,
[(C₁₇H₃₅O-(CH₂-CH₂O)₅]₂(EtO)Si(CH₂)₃SH,
[(C₁₇H₃₅O-(CH₂-CH₂O)₆]₂(EtO)Si(CH₂)₃SH,

[(C₁₈H₃₇O)-(CH₂-CH₂O)₂]₂(EtO)Si(CH₂)₃SH,
[(C₁₈H₃₇O-(CH₂-CH₂O)₃]₂(EtO)Si(CH₂)₃SH,
[(C₁₈H₃₇O-(CH₂-CH₂O)₄]₂(EtO)Si(CH₂)₃SH,
[(C₁₈H₃₇O-(CH₂-CH₂O)₅]₂(EtO)Si(CH₂)₃SH,
[(C₁₈H₃₇O-(CH₂-CH₂O)₆]₂(EtO)Si(CH₂)₃SH,

[(C₄H₉O-(CH₂-CH₂O)₂]₃Si(CH₂)₃SH,
[(C₄H₉O-(CH₂-CH₂O)₃]₃Si(CH₂)₃SH,
[(C₄H₉O-(CH₂-CH₂O)₄]₃Si(CH₂)₃SH,
[(C₄H₉O-(CH₂-CH₂O)₅]₃Si(CH₂)₃SH,
[(C₄H₉O-(CH₂-CH₂O)₆]₃Si(CH₂)₃SH,

[(C₆H₁₃O-(CH₂-CH₂O)₂]₃Si(CH₂)₃SH,
[(C₆H₁₃O-(CH₂-CH₂O)₃]₃Si(CH₂)₃SH,
[(C₆H₁₃O-(CH₂-CH₂O)₄]₃Si(CH₂)₃SH,
[(C₆H₁₃O-(CH₂-CH₂O)₅]₃Si(CH₂)₃SH,
[(C₆H₁₃O-(CH₂-CH₂O)₆]₃Si(CH₂)₃SH,

[(C₈H₁₇O-(CH₂-CH₂O)₂]₃Si(CH₂)₃SH,
[(C₈H₁₇O-(CH₂-CH₂O)₃]₃Si(CH₂)₃SH,
[(C₈H₁₇O-(CH₂-CH₂O)₄]₃Si(CH₂)₃SH,
[(C₈H₁₇O-(CH₂-CH₂O)₅]₃Si(CH₂)₃SH,
[(C₈H₁₇O-(CH₂CH₂O)₆]₃Si(CH₂)₃SH,

[(C₉H₁₉O-(CH₂-CH₂O)₂]₃Si(CH₂)₃SH,
[(C₉H₁₉O-(CH₂-CH₂O)₃]₃Si(CH₂)₃SH,
[(C₉H₁₉O-(CH₂-CH₂O)₄]₃Si(CH₂)₃SH,
[(C₉H₁₉O-(CH₂-CH₂O)₅]₃Si(CH₂)₃SH,
[(C₉H₁₉O-(CH₂-CH₂O)₆]₃Si(CH₂)₃SH,

[(C₁₀H₂₁O-(CH₂-CH₂O)₂]₃Si(CH₂)₃SH,
[(C₁₀H₂₁O-(CH₂-CH₂O)₃]₃Si(CH₂)₃SH,
[(C₁₀H₂₁O-(CH₂-CH₂O)₄]₃Si(CH₂)₃SH,
[(C₁₀H₂₁O-(CH₂-CH₂O)₅]₃Si(CH₂)₃SH,
[(C₁₀H₂₁O-(CH₂-CH₂O)₆]₃Si(CH₂)₃SH,

[(C₁₂H₂₅O-(CH₂₋CH₂O)₂]₃Si(CH₂)₃SH,
[(C₁₂H₂₅O-(CH₂-CH₂O)₃]₃Si(CH₂)₃SH,
[(C₁₂H₂₅O-(CH₂-CH₂O)₄]₃Si(CH₂)₃SH,
[(C₁₂H₂₅O-(CH₂-CH₂O)₅]₃Si(CH₂)₃SH,
[(C₁₂H₂₅O-(CH₂-CH₂O)₆]₃Si(CH₂)₃SH,

[(C₁₃H₂₇O-(CH₂-CH₂O)₂]₃Si(CH₂)₃SH,
[(C₁₃H₂₇O-(CH₂-CH₂O)₃]₃Si(CH₂)₃SH,
[(C₁₃H₂₇O-(CH₂-CH₂O)₄]₃Si(CH₂)₃SH,
[(C₁₃H₂₇O-(CH₂-CH₂O)₅]₃Si(CH₂)₃SH,
[(C₁₃H₂₇O-(CH₂-CH₂O)₆]₃Si(CH₂)₃SH,

[(C₁₄H₂₉O-(CH₂-CH₂O)₂]₃Si(CH₂)₃SH,
[(C₁₄H₂₉O-(CH₂-CH₂O)₃]₃Si(CH₂)₃SH,
[(C₁₄H₂₉O-(CH₂-CH₂O)₄]₃Si(CH₂)₃SH,
[(C₁₄H₂₉O-(CH₂-CH₂O)₅]₃Si(CH₂)₃SH,
[(C₁₄H₂₉O-(CH₂-CH₂O)₆]₃Si(CH₂)₃SH,

[(C₁₅H₃₁O-(CH₂-CH₂O)₂]₃Si(CH₂)₃SH,
[(C₁₅H₃₁O-(CH₂-CH₂O)₃]₃Si(CH₂)₃SH,
[(C₁₅H₃₁O-(CH₂-CH₂O)₄]₃Si(CH₂)₃SH,
[(C₁₅H₃₁O-(CH₂-CH₂O)₅]₃Si(CH₂)₃SH,
[(C₁₅H₃₁O-(CH₂-CH₂O)₆]₃Si(CH₂)₃SH,

[(C₁₆H₃₃O-(CH₂-CH₂O)₂]₃Si(CH₂)₃SH,
[(C₁₆H₃₃O-(CH₂-CH₂O)₃]₃Si(CH₂)₃SH,
[(C₁₆H₃₃O-(CH₂-CH₂O)₄]₃Si(CH₂)₃SH,
[(C₁₆H₃₃O-(CH₂-CH₂O)₅]₃Si(CH₂)₃SH,
[(C₁₆H₃₃O-(CH₂-CH₂O)₆]₃Si(CH₂)₃SH,

[(C₁₈H₃₇O-(CH₂-CH₂O)₂]₃Si(CH₂)₃SH,
[(C₁₈H₃₇O-(CH₂-CH₂O)₃]₃Si(CH₂)₃SH,
[(C₁₈H₃₇O-(CH₂-CH₂O)₄]₃Si(CH₂)₃SH,
[(C₁₈H₃₇O-(CH₂-CH₂O)₅]₃Si(CH₂)₃SH oder
   [(C₁₈H₃₇O- (CH₂-CH₂O)₆]₃Si (CH₂)₃SH, wobei die Alkylreste unverzweigt oder verzweigt sein können.

Verbindungen der Formel I mit Alk = C₃H₇, C₄H₉, C₅H₁₁, C₆H₁₃, C₇H₁₅, C₈H₁₇, C₉H₁₉, C₁₀H₂₁, C₁₁H₂₃, C₁₂H₂₅, C₁₃H₂₇, C₁₄H₂₉, C₁₅H₃₁, C₁₆H₃₃, C₁₇H₃₅, C₁₈H₃₇, C₁₉H₃₉ oder C₂₀H₄₁ können sein:
[(Alk-O-(CH₂-CH(CH₃)O-)₂](MeO)₂Si(CH₂)₃SH,
[(Alk-O-(CH₂-CH(CH₃)O-)₃](MeO)₂Si(CH)₃SH,
[(Alk-O-(CH₂-CH(CH₃)O-)₄](MeO)₂Si(CH₂)₃SH,
[(Alk-O-(CH₂-CH(CH₃)O-)₅](MeO)₂Si(CH₂)₃SH,
[(Alk-O-(CH₂-CH(CH₃)O-)₆](MeO)₂Si(CH₂)₃SH,
[(Alk-O-(CH₂-CH(CH₃)O-)₇](MeO)₂Si(CH₂)₃SH,
[(Alk-O-(CH₂-CH(CH₃)O-)₈](MeO)₂Si(CH₂)₃SH,
[(Alk-O-(CH₂-CH(CH₃)O-)₉](MeO)₂Si(CH₂)₃SH,
[(Alk-O-(CH₂-CH(CH₃)O-)₁₀](MeO)₂Si(CH₂)₃SH,
[(Alk-O- (CH₂-CH(CH₃)O-)₁₁](MeO)₂Si(CH₂)₃SH,
[(Alk-O-(CH₂-CH(CH₃)O-)₁₂](MeO)₂Si(CH₂)₃SH,
[(Alk-O-(CH₂-CH(CH₃)O-)₁₃](MeO)₂Si(CH₂)₃SH,
[(Alk-O-(CH₂-CH(CH₃)O-)₁₄](MeO)₂Si(CH₂)₃SH,
[(Alk-O-(CH₂-CH(CH₃)O-)₁₅](MeO)₂Si(CH₂)₃SH,
[(Alk-O-(CH₂-CH(CH₃)O-)₁₆](MeO)₂Si(CH₂)₃SH,
[(Alk-O-(CH₂-CH(CH₃)O-)₁₇](MeO)₂Si(CH₂)₃SH,
[(Alk-O-(CH₂-CH(CH₃)O-)₁₈](MeO)₂Si(CH₂)₃SH,
[(Alk-O-(CH₂-CH(CH₃)O-)₁₉](MeO)₂Si(CH₂)₃SH,
[(Alk-O-(CH₂-CH(CH₃)O-)₂₀](MeO)₂Si(CH₂)₃SH,

[(Alk-O-(CH₂-CH(CH₃)O-)₂]₂(MeO)Si(CH₂)₃SH,
[(Alk-O-(CH₂-CH(CH₃)O-)₃]₂(MeO)Si(CH₂)₃SH,
[(Alk-O-(CH₂-CH(CH₃)O-)₄]₂(MeO)Si(CH₂)₃SH,
[(Alk-O-(CH₂-CH(CH₃)O-)₅]₂(MeO)Si(CH₂)₃SH,
[(Alk-O-(CH₂-CH(CH₃)O-)₆]₂(MeO)Si(CH₂)₃SH,
[(Alk-O-(CH₂-CH(CH₃)O-)₇]₂(MeO)Si(CH₂)₃SH,
[(Alk-O-(CH₂-CH(CH₃)O-)₈]₂(MeO)Si(CH₂)₃SH,
[(Alk-O-(CH₂-CH(CH₃)O-)₉]₂(MeO)Si(CH₂)₃SH,
[(Alk-O-(CH₂-CH(CH₃)O-)₁₀]₂(MeO)Si(CH₂)₃SH,
[(Alk-O-(CH₂-CH(CH₃)O-)₁₁]₂(MeO)Si(CH₂)₃SH,
[(Alk-O-(CH₂-CH(CH₃)O-)₁₂]₂(MeO)Si(CH₂)₃SH,
[(Alk-O-(CH₂-CH(CH₃)O-)₁₃]₂(MeO)Si(CH₂)₃SH,
[(Alk-O-(CH₂-CH(CH₃)O-)₁₄]₂(MeO)Si(CH₂)₃SH,
[(Alk-O-(CH₂-CH(CH₃)O-)₁₅]₂(MeO)Si(CH₂)₃SH,
[(Alk-O-(CH₂-CH(CH₃)O-)₁₅]₂(MeO)Si(CH₂)₃SH,
[(Alk-O-(CH₂-CH(CH₃)O-)₁₇]₂(MeO)Si(CH₂)₃SH,
[(Alk-O-(CH₂-CH(CH₃)O-)₁₈]₂(MeO)Si(CH₂)₃SH,
[(Alk-O-(CH₂-CH(CH₃)O-)₁₉]₂(MeO)Si(CH₂)₃SH,
[(Alk-O-(CH₂-CH(CH₃)O-)₂₀]₂(MeO)Si(CH₂)₃SH,

[(Alk-O-(CH₂-CH(CH₃)O-)₂](Me)(MeO)Si(CH2)₃SH,
[(Alk-O-(CH₂-CH(CH₃)O-)₃](Me)(MeO)Si(CH2)₃SH,
[(Alk-O-(CH₂-CH(CH₃)O-)₄](Me)(MeO)Si(CH₂)₃SH,
[(Alk-O-(CH₂-CH(CH₃)O-)₅](Me)(MeO)Si(CH₂)₃SH,
[(Alk-O-(CH₂-CH(CH₃)O-)₆](Me)(MeO)Si(CH₂)₃SH,
[(Alk-O-(CH₂-CH(CH₃)O-)₇](Me)(MeO)Si(CH₂)₃SH,
[(Alk-O-(CH₂-CH(CH₃)O-)₈](Me)(MeO)Si(CH₂)₃SH,
[(Alk-O-(CH₂-CH(CH₃)O-)₉](Me)(MeO)Si(CH₂)₃SH,
[(Alk-O-(CH₂-CH(CH₃)O-)₁₀](Me)(MeO)Si(CH₂)₃SH,
[(Alk-O-(CH₂-CH(CH₃)O-)₁₁](Me)(MeO)Si(CH₂)₃SH,
[(Alk-O-(CH₂-CH(CH₃)O-)₁₂](Me)(MeO)Si(CH₂)₃SH,
[(Alk-O-(CH₂-CH(CH₃)O-)₁₃](Me)(MeO)Si(CH₂)₃SH,
[(Alk-O-(CH₂-CH(CH₃)O-)₁₄](Me)(MeO)Si(CH₂)₃SH,
[(Alk-O-(CH₂-CH(CH₃)O-)₁₅](Me)(MeO)Si(CH₂)₃SH,
[(Alk-O-(CH₂-CH(CH₃)O-)₁₆](Me)(MeO)Si(CH₂)₃SH,
[(Alk-O-(CH₂-CH(CH₃)O-)₁₇](Me)(MeO)Si(CH₂)₃SH,
[(Alk-O-(CH₂-CH(CH₃)O-)₁₈](Me)(MeO)Si(CH₂)₃SH,
[(Alk-O-(CH₂-CH(CH₃)O-)₁₉](Me)(MeO)Si(CH₂)₃SH,
[(Alk-O-(CH₂-CH(CH₃)O-)₂₀](Me)(MeO)Si(CH₂)₃SH,

[(Alk-O-(CH₂-CH(CH₃)O-)₂](EtO)₂Si(CH₂)₃SH,
[(Alk-O-(CH₂-CH(CH₃)O-)₃](EtO)₂Si(CH₂)₃SH,
[(Alk-O-(CH₂-CH(CH₃)O-)₉](EtO)₂Si(CH₂)₃SH,
[(Alk-O-(CH₂-CH(CH₃)O-)₅](EtO)₂Si(CH₂)₃SH,
[(Alk-O-(CH₂-CH(CH₃)O-)₆](EtO)₂Si(CH₂)₃SH,
[(Alk-O-(CH₂-CH(CH₃)O-)₇](EtO)₂Si(CH₂)₃SH,
[(Alk-O-(CH₂-CH(CH₃)O-)₈](EtO)₂Si(CH₂)₃SH,
[(Alk-O-(CH₂-CH(CH₃)O-)₉](EtO)₂Si(CH₂)₃SH,
[(Alk-O-(CH₂-CH(CH₃)O-)₁₀](EtO)₂Si(CH₂)₃SH,
[(Alk-O-(CH₂-CH(CH₃)O-)₁₁](EtO)₂Si(CH₂)₃SH,
[(Alk-O-(CH₂-CH(CH₃)O-)₁₂](EtO)₂Si(CH₂)₃SH,
[(Alk-O-(CH₂-CH(CH₃)O-)₁₃](EtO)₂Si(CH₂)₃SH,
[(Alk-O-(CH₂-CH(CH₃)O-)₁₄](EtO)₂Si(CH₂)₃SH,
[(Alk-O-(CH₂-CH(CH₃)O-)₁₅](EtO)₂Si(CH₂)₃SH,
[(Alk-O-(CH₂-CH(CH₃)O-)₁₆](EtO)₂Si(CH₂)₃SH,
[(Alk-O-(CH₂-CH(CH₃)O-)₁₇](EtO)₂Si(CH₂)₃SH,
[(Alk-O-(CH₂-CH(CH₃)O-)₁₈](EtO)₂Si(CH₂)₃SH,
[(Alk-O-(CH₂-CH(CH₃)O-)₁₉](EtO)₂Si(CH₂)₃SH,
[(Alk-O-(CH₂-CH(CH₃)O-)₂₀](EtO)₂Si(CH₂)₃SH,

[(Alk-O-(CH₂-CH(CH₃)O-)₂]₂(EtO)Si(CH₂)₃SH,
[(Alk-O-(CH₂-CH(CH₃)O-)₃]₂(EtO)Si(CH₂)₃SH,
[(Alk-O-(CH₂-CH(CH₃)O-)₉]₂(EtO)Si(CH₂)₃SH,
[(Alk-O-(CH₂-CH(CH₃)O-)₅]₂(EtO)Si(CH₂)₃SH,
[(Alk-O-(CH₂-CH(CH₃)O-)₆]₂(EtO)Si(CH₂)₃SH,
[(Alk-O-(CH₂-CH(CH₃)O-)₇]₂(EtO)Si(CH₂)₃SH,
[(Alk-O-(CH₂-CH(CH₃)O-)₈]₂(EtO)Si(CH₂)₃SH,
[(Alk-O-(CH₂-CH(CH₃)O-)₉]₂(EtO)Si(CH₂)₃SH,
[(Alk-O-(CH₂-CH(CH₃)O-)₁₀]₂(EtO)Si(CH₂)₃SH,
[(Alk-O-(CH₂-CH(CH₃)O-)₁₁]₂(EtO)Si(CH₂)₃SH,
[(Alk-O-(CH₂-CH(CH₃)O-)₁₂]₂(EtO)Si(CH₂)₃SH,
[(Alk-O-(CH₂-CH(CH₃)O-)₁₃]₂(EtO)Si(CH₂)₃SH,
[(Alk-O-(CH₂-CH(CH₃)O-)₁₄]₂(EtO)Si(CH₂)₃SH,
[(Alk-O-(CH₂-CH(CH₃)O-)₁₅]₂(EtO)Si(CH₂)₃SH,
[(Alk-O-(CH₂-CH(CH₃)O-)₁₆]₂(EtO)Si(CH₂)₃SH,
[(Alk-O-(CH₂-CH(CH₃)O-)₁₇]₂(EtO)Si(CH₂)₃SH,
[(Alk-O-(CH₂-CH(CH₃)O-)₁₈](EtO)Si(CH₂)₃SH,
[(Alk-O-(CH₂-CH(CH₃)O-)₁₉]₂(EtO)Si(CH₂)₃SH,
[(Alk-O-(CH₂-CH(CH₃)O-)₂₀]₂(EtO)Si(CH₂)₃SH,

[(Alk-O-(CH₂-CH(CH₃)O-)₂](Me)(EtO)Si(CH₂)₃SH,
[(Alk-O-(CH₂-CH(CH₃)O-)₃](Me)(EtO)Si(CH₂)₃SH,
[(Alk-O-(CH₂-CH(CH₃)O-)₄](Me)(EtO)Si(CH₂)₃SH,
[(Alk-O-(CH₂-CH(CH₃)O-)₅](Me)(EtO)Si(CH₂)₃SH,
[(Alk-O-(CH₂-CH(CH₃)O-)₆](Me)(EtO)Si(CH₂)₃SH,
[(Alk-O-(CH₂-CH(CH₃)O-)₇](Me)(EtO)Si(CH₂)₃SH,
[(Alk-O-(CH₂-CH(CH₃)O-)₈](Me)(EtO)Si(CH₂)₃SH,
[(Alk-O-(CH₂-CH(CH₃)O-)₉](Me)(EtO)Si(CH₂)₃SH,
[(Alk-O-(CH₂-CH(CH₃)O-)₁₀](Me)(EtO)Si(CH₂)₃SH,
[(Alk-O-(CH₂-CH (CH₃)O-)₁₁](Me)(EtO)Si(CH₂)₃SH,
[(Alk-O-(CH₂-CH(CH₃)O-)₁₂](Me)(EtO)Si(CH₂)₃SH,
[(Alk-O-(CH₂-CH(CH₃)O-)₁₃](Me)(EtO)Si(CH₂)₃SH,
[(Alk-O-(CH₂-CH(CH₃)O-)₁₄](Me)(EtO)Si(CH₂)₃SH,
[(Alk-O-(CH₂-CH(CH₃)O-)₁₅](Me)(EtO)Si(CH₂)₃SH,
[(Alk-O-(CH₂-CH(CH₃)O-)₁₆](Me)(EtO)Si(CH₂)₃SH,
[(Alk-O-(CH₂-CH(CH₃)O-)₁₇](Me)(EtO)Si(CH₂)₃SH,
[(Alk-O-(CH₂-CH(CH₃)O-)₁₈](Me)(EtO)Si(CH₂)₃SH,
[(Alk-O-(CH₂-CH(CH₃)O-)₁₉](Me)(EtO)Si(CH₂)₃SH,
[(Alk-O-(CH₂-CH(CH₃)O-)₂₀](Me)(EtO)Si(CH₂)₃SH,

[(Alk-O-(CH₂-CH(CH₃)O-)₂]₂(Me)Si(CH₂)₃SH,
[(Alk-O-(CH₂-CH(CH₃)O-)₃]₂(Me)Si(CH₂)₃SH,
[(Alk-O-(CH₂-CH(CH₃)O-)₄]₂(Me)Si(CH₂)₃SH,
[(Alk-O-(CH₂-CH(CH₃)O-)₅]₂(Me)Si(CH₂)₃SH,
[(Alk-O-(CH₂-CH(CH₃)O-)₆]₂(Me)Si(CH₂)₃SH,
[(Alk-O-(CH₂-CH(CH₃)O-)₇]₂(Me)Si(CH₂)₃SH,
[(Alk-O-(CH₂-CH(CH₃)O-)₈]₂(Me)Si(CH₂)₃SH,
[(Alk-O-(CH₂-CH(CH₃)O-)₉]₂(Me)Si(CH₂)₃SH,
[(Alk-O-(CH₂-CH(CH₃)O-)₁₀]₂(Me)Si(CH₂)₃SH,
[(Alk-O-(CH₂-CH(CH₃)O-)₁₁]₂(Me)Si(CH₂)₃SH,
[(Alk-O-(CH₂-CH(CH₃)O-)₁₂]₂(Me)Si(CH₂)₃SH,
[(Alk-O-(CH₂-CH(CH₃)O-)₁₃]₂(Me)Si(CH₂)₃SH,
[(Alk-O-(CH₂-CH(CH₃)O-)₁₄]₂(Me)Si(CH₂)₃SH,
[(Alk-O-(CH₂-CH(CH₃)O-)₁₅]₂(Me)Si(CH₂)₃SH,
[(Alk-O-(CH₂-CH(CH₃)O-)₁₆]₂(Me)Si(CH₂)₃SH,
[(Alk-O-(CH₂-CH(CH₃)O-)₁₇]₂(Me)Si(CH₂)₃SH,
[(Alk-O-(CH2-CH(CH₃)O-)₁₈]₂(Me)Si(CH₂)₃SH,
[(Alk-O-(CH₂-CH(CH₃)O-)₁₉]₂(Me)Si(CH₂)₃SH,
[(Alk-O-(CH₂-CH(CH₃)O-)₂₀]₂(Me)Si(CH₂)₃SH,
[(Alk-O-(CH₂-CH(CH₃)O-)₂](Me)₂Si(CH₂)₃SH,
[(Alk-O-(CH₂-CH(CH₃)O-)₃](Me)₂Si(CH₂)₃SH,
[(Alk-O-(CH₂-CH(CH₃)O-)₄](Me)₂Si(CH₂)₃SH,
[(Alk-O-(CH₂-CH(CH₃)O-)₅](Me)₂Si(CH₂)₃SH,
[(Alk-O-(CH₂-CH(CH₃)O-)₆](Me)₂Si(CH₂)₃SH,
[(Alk-O-(CH₂-CH(CH₃)O-)₇](Me)₂Si(CH₂)₃SH,
[(Alk-O-(CH₂-CH(CH₃)O-)₈](Me)₂Si(CH₂)₃SH,
[(Alk-O-(CH₂-CH(CH₃)O-)₉](Me)₂Si(CH₂)₃SH,
[(Alk-O-(CH₂-CH(CH₃)O-)₁₀](Me)₂Si(CH₂)₃SH,
[(Alk-O-(CH₂-CH(CH₃)O-)₁₁](Me)₂Si(CH₂)₃SH,
[(Alk-O-(CH₂-CH(CH₃)O-)₁₂](Me)₂Si(CH₂)₃SH,
[(Alk-O-(CH₂-CH(CH₃)O-)₁₃](Me)₂Si(CH₂)₃SH,
[(Alk-O-(CH₂-CH(CH₃)O-)₁₄](Me)₂Si(CH₂)₃SH,
[(Alk-O-(CH₂-CH(CH₃)O-)₁₅](Me)₂Si(CH₂)₃SH,
[(Alk-O-(CH₂-CH(CH₃)O-)₁₆](Me)₂Si(CH₂)₃SH,
[(Alk-O-(CH₂-CH(CH₃)O-)₁₇](Me)₂Si(CH₂)₃SH,
[(Alk-O-(CH₂-CH(CH₃)O-)₁₈](Me)₂Si(CH₂)₃SH,
[(Alk-O-(CH₂-CH(CH₃)O-)₁₉](Me)₂Si(CH₂)₃SH oder
[(Alk-O-(CH₂-CH(CH₃)O-)₂₀](Me)₂Si(CH₂)₃SH, wobei die Gruppen Alk unverzweigt oder verzweigt sein können.

Als (Halogenorganyl)alkylpolyethersilan können Verbindungen der allgemeinen Formel II

(X) (X') (X") Si-R^{I}-Hal II

eingesetzt werden, wobei R^{I}, X, X' und X" die oben angegebene Bedeutung haben und Hal gleich Chlor, Brom, Fluor oder Iod ist.

Vorzugsweise können als (Halogenorganyl)alkylpolyethersilane diejenigen verwendet werden, die sich aus den oben aufgeführten (Mercaptoorganyl)alkylpolyethersilanen durch den formalen Austausch des Substituenten HS- durch Hal- ergeben.

Das (Halogenorganyl)alkylpolyethersilan kann ein (Halogenorganyl)alkylpolyethersilan der Formel II oder eine Mischung aus (Halogenorganyl)alkylpolyethersilanen der Formel II sein.

Mercaptierungsreagenzien sind Verbindungen, die eine Halogen-C-Bindung in einem Kohlenwasserstoff in eine HS-C-Bindung umwandeln können.

Die trockenen Mercaptierungsreagenzien können einen Wassergehalt von kleiner 2,5 Gew.-%, vorzugsweise kleiner 2 Gew.-%, besonders bevorzugt kleiner 1 Gew.-%, ganz besonders bevorzugt kleiner 0,5 Gew.-%, außerordentlich bevorzugt kleiner 0,2 Gew.-%, haben.

Der Wassergehalt von festen Mercaptierungsreagenzien kann folgendermaßen bestimmt werden: Für die Wassergehaltsbestimmung werden Glasperlen angehaucht, mit Phosphorpentoxid belegt und anschließend in ein U-Rohr gefüllt. Ca. 3g der Probe werden in einen 50 ml Kolben eingewogen, unter mit Sicapent getrocknetem Stickstoffstrom (30ml/min) 2 Stunden lang bei 320°C ausgeheizt und anschließend noch 30 min unter Stickstoffstrom stehen gelassen. Das feuchte Trägergas wird über eine Schlauchverbindung vom Kolben in das U-Rohr geleitet. Mögliche Kondensationen zwischen Kolben und U-Rohr werden während der Ausheizphase mit Hilfe eines Föns ausgetrieben. Das U-Rohr wird zurückgewogen und die aus den Schwefelungsreagenzien freigesetzte Wassermenge gravimetrisch bestimmt.

Der Wassergehalt von in situ gebildeten Mercaptierungsreagenzien, beispielsweise aus H₂S und Alkalialkoholaten, kann durch Wasserbestimmung in den dafür verwendeten Edukten, beispielsweise dem H₂S und dem Alkalialkoholat, bestimmt werden.

Der Wassergehalt von in situ gebildeten Mercaptierungsreagenzien, beispielsweise aus H₂S und dem festen, trockenem Reagenz Na₂S, kann durch Wasserbestimmung in den dafür verwendeten Edukten, beispielsweise dem H₂S und dem festen, trockenen Na₂S, bestimmt werden.

Der Wassergehalt von in situ gebildeten Mercaptierungsreagenzien, beispielsweise Ammoniumhydrogensulfid aus H₂S und Amin, kann durch Wasserbestimmung in den dafür verwendeten Edukten, beispielsweise dem H₂S und Amin, bestimmt werden.

Die für die Reaktion benötigten trockenen Mercaptierungsreagenzien können Alkalimetallhydrogensulfid oder Ammoniumhydrogensulfid sein.

Das verwendete Mercaptierungsreagenz kann keine Harnstoffderivate oder Thioharnstoffderivate enthalten oder aus diesen gebildet werden.

Als trockenes Alkalimetallhydrogensulfid können Lithiumhydrogensulfid (LiSH), Natriumhydrogensulfid (NaSH), Kaliumhydrogensulfid (KSH) und Cäsiumhydrogensulfid (CsSH) eingesetzt werden.

Als trockenes Ammoniumhydrogensulfid können (NH₄)SH, NH₃(Sub)SH, NH₂(Sub)₂SH oder NH(Sub)₃SH eingesetzt werden, wobei Sub eine verzweigte oder unverzweigte, gesättigte oder ungesättigte, aliphatische, aromatische oder gemischt aliphatische /aromatische einbindige C₁-C₃₀ -, bevorzugt C₁-C₂₅ -, besonders bevorzugt C₂-C₂₀ -, ganz besonders bevorzugt C₃-C₁₆ -, außerordentlich bevorzugt C₁₁-C₂₅-, Kohlenwasserstoffgruppe ist. Die Gruppe Sub kann CH₃, CH₂-CH₃, i-Propyl, n-Propyl, n-Butyl, i-Butyl, t-Butyl, Pentyl oder Phenyl sein.

Die verwendete, molare Menge an trockenem Mercaptierungsreagenz kann bezüglich der Menge des eingesetzten (Halogenorganyl)alkylpolyethersilans 70 mol% bis 150 mol%, vorzugsweise 90 mol% bis 125 mol%, besonders bevorzugt 95 mol% bis 115 mol%, außerordentlich bevorzugt 100 bis 110 mol%, betragen.

Geringere als äquimolare Mengen an trockenen Mercaptierungsreagenzien können zu einer unvollständigen Umsetzung führen. Dadurch kann in der Folge das Produkt entweder mit Edukt verunreinigt sein, oder es wird unter Umständen eine aufwendige Reinigung, zum Beispiel Destillation notwendig, um Edukte und Produkte voneinander zu trennen.

Die für die Reaktion benötigten trockenen Mercaptierungsreagenzien können vor oder während der Reaktion gebildet werden.

Die Bildung der benötigten trockenen Mercaptierungsreagenzien kann vor der Reaktion mit dem Halogenorganyl)alkylpolyethersilan abgeschlossen sein.

Die trockenen Alkalihydrogensulfide können aus wasserhaltigen Alkalihydrogensulfiden durch Trocknung gebildet werden. Bei der Trocknung kann es sich um eine azeotrope Trocknung, eine Trocknung mit infrarotem Licht, eine Trocknung mit Mikrowellen, eine Trocknung bei erhöhter Temperatur, eine Trocknung bei erniedrigtem Druck, eine Trocknung bei erhöhter Temperatur und erniedrigtem Druck oder eine Trocknung bei erniedrigter Temperatur (Gefriertrocknung) handeln.

Die für die Reaktion benötigten trockenen Mercaptierungsreagenzien können vor oder während der Reaktion aus Alkoholaten und H₂S gebildet werden.

Die Alkoholate können Alkalialkoholate sein. Alkoholate können Mischungen von Alkalialkoholaten sein.

Bevorzugte Alkalialkoholate können Na(O-Alk), Li(O-Alk), K(O-Alk), NaO-(CR^{II}₂-CR^{II}₂-O)ᵥ-Alk, LiO-(CR^{II}₂-CR^{II}₂-O)ᵥ-Alk und KO-(CR^{II}₂-CR^{II}₂-O)ᵥ-Alk sein. Besonders bevorzugte Alkalialkoholate können Na-OMe, Na-OEt, Na-OC₃H₇, Na-O-C₄H₉, Li-OMe, Li-OEt, Li-OC₃H₇, Li-O-C₄H₉, K-OMe, K-OEt, K-OC₃H₇ und K-O-C₄H₉ sein.

Die für die Reaktion benötigten trockenen Mercaptierungsreagenzien können vor oder während der Reaktion aus trockenem Alkalisulfid und H₂S gebildet werden. Bevorzugte Alkalisulfide sind Li₂S, Na₂S oder K₂S.

Die trockenen Alkalisulfide können aus Alkoholaten und H₂S gebildet werden.

Die trockenen Alkalisulfide können aus wasserhaltigen Alkalisulfiden durch Trocknung gebildet werden. Bei der Trocknung kann es sich um eine azeotrope Trocknung, eine Trocknung mit infrarotem Licht, eine Trocknung mit Mikrowellen, eine Trocknung bei erhöhter Temperatur, eine Trocknung bei erniedrigtem Druck, eine Trocknung bei erhöhter Temperatur und erniedrigtem Druck oder eine Trocknung bei erniedrigter Temperatur (Gefriertrocknung) handeln.

Die für die Reaktion benötigten trockenen Mercaptierungsreagenzien können vor oder während der Reaktion aus wasserhaltigen Mercaptierungsreagenzien und Trocknungsmittel gebildet werden.

Trocknungsmittel können Halogensilane oder Alkoxysilane sein.

Die für die Reaktion benötigten trockenen Mercaptierungsreagenzien können vor oder während der Reaktion aus wasserhaltigen Mercaptierungsreagenzien und Halogensilanen gebildet werden.

Halogensilane können 1, 2, 3 oder 4 Hal-Bindungen je Siliciumatom enthalten. Halogensilane können Chlorsilane sein. Chlorsilane können (CH₃)SiCl₃, (CH₃)₂SiCl₂, (CH₃)₃SiCl, SiCl₄, (CH₃CH₂CH₂)SiCl₃, (Cl-CH₂CH₂CH₂)SiCl₃, (Cl-CH₂CH₂CH₂) SiCl₂ (OMe), (Cl-CH₂CH₂CH₂)SiCl₂(OEt), (Cl-CH₂CH₂CH₂) SiCl₂ (X), (Cl-CH₂CH₂CH₂) SiCl (OMe) ₂, (Cl-CH₂CH₂CH₂)SiCl(OEt)₂, (Cl-CH₂CH₂CH₂)SiCl(X)₂, HSiCl₃ oder H₂SiCl₂ sein.

Halogensilane können Mischungen von verschiedenen Halogensilanen sein.

Die für die Reaktion benötigten trockenen Mercaptierungsreagenzien können vor oder während der Reaktion aus wasserhaltigen Mercaptierungsreagenzien und Alkoxysilanen gebildet werden.

Alkoxysilane können 1, 2, 3 oder 4 (-O-Sub)-Substituenten je Siliciumatom enthalten. Alkoxysilane können Methoxysilane, Ethoxysilane, Propoxy oder Butoxysilane sein. Alkoxysilane können (CH₃)Si(OMe)₃, (CH₃)₂Si(OMe)₂, (CH₃)₃SiOMe, SiOMe₄, (CH₃CH₂CH₂)Si(OMe)₃, (Cl-CH₂CH₂CH₂)Si(OMe)₃, (CH₃)Si(OEt)₃, (CH₃)₂Si(OEt)₂, (CH₃)₃SiOEt, SiOEt₄, (CH₃CH₂CH₂)Si(OEt)₃, (Cl-CH₂CH₂CH₂)Si(OEt)₃, Si(OC₃H₇)₄, Si(OC₄H₉)₄, (Cl-CH₂CH₂CH₂)SiCl₂(OMe), (Cl-CH₂CH₂CH₂)SiCl₂(OEt), (Cl-CH₂CH₂CH₂)SiCl₂(X), (Cl-CH₂CH₂CH₂)SiCl(OMe) ₂, (Cl-CH₂CH₂CH₂)SiCl(OEt)₂ oder (Cl-CH₂CH₂CH₂) SiCl (X)₂ sein.

Alkoxysilane können Mischungen von verschiedenen Alkoxysilanen sein.

Die für die Reaktion benötigten trockenen Mercaptierungsreagenzien können vor oder während der Reaktion aus Aminen und H₂S gebildet werden. Amine können sein (Sub)-NH₂, (Sub)₂NH, (Sub)₃N. Amine können bevorzugt sein NH₃, CH₃-NH₂, (CH₃)₂NH, (CH₃)₃N, CH₃CH₂-NH₂, (CH₃CH₂)₂NH, (CH₃CH₂) ₃N oder C₆H₅-NH₂.

Die Protonierung von Eduktverbindungen aus denen vor oder während der Reaktion Alkalihydrogensulfid oder Ammoniumhydrogensulfid gebildet wird, kann durch H₂S und / oder organische und / oder anorganische Säuren erfolgen.

Die Deprotonierung der Eduktverbindungen aus denen vor oder während der Reaktion Alkalihydrogensulfid oder Ammoniumhydrogensulfid gebildet werden kann, kann durch organische und / oder anorganische Basen erfolgen.

Die Eduktverbindung, aus der durch Deprotonierung Alkalihydrogensulfid gebildet werden kann, kann H₂S sein.

Als anorganische Basen für die Deprotonierung von H₂S können beispielsweise (Alkaliion)₂HPO₄, (Alkaliion)₃PO₄, (Alkaliion)₂CO₃ oder (Alkaliion)₂SO₄ verwendet werden. Bevorzugt können Na₃PO₄, K₃PO₄, Na₂HPO₄, K₂HPO₄, K₂CO₃, Na₂CO₃, Na₂SO₄ oder K₂SO₄ eingesetzt werden.

Vor, während oder nach der Reaktion können Additive zugesetzt werden.

Als Additive können bevorzugt in reiner oder technischer Qualität Alkane, wie beispielsweise Pentan, Hexan, Cyclohexan, Heptan oder Oktan, Ether, wie beispielsweise Diethylether, Tetrahydrofuran, 1,2-Dimethoxyethan, Dioxan, Dioxolan, Ethylenglykole oder Propylenglykole, Aromaten, wie beispielsweise Benzol, Toluol, o-Xylol, m-Xylol oder p-Xylol, oder Carbonylverbindungen, wie beispielsweise Dimethylformamid, eingesetzt werden.

Als Additive können Halogenorganyl(halogensilane) eingesetzt werden. Als Halogenorganyl(halogensilane) können Verbindungen der allgemeinen Formeln III, IV oder V

(X)_{3-f}Hal_{f}Si-R^{I}-Hal III

(X)₂₋ₕHalₕ(CH₃)Si-R^{I}-Hal IV

Hal (CH₃)₂Si-R^{I}-Hal V

eingesetzt werden, wobei
f gleich 1-3 ist,
h gleich 1 oder 2 ist,
X, Hal und R^{I} die oben angegebene Bedeutung haben.

Vorzugsweise können als (Halogenorganyl)halogensilane
3-Chlorbutyl(trichlorsilan),
3-Chlorpropyl(trichlorsilan),
3-Chlor-2-Methyl-propyl(trichlorsilan),
2-Chlorethyl(trichlorsilan),
1-Chlormethyl(trichlorsilan),
3-Chlorbutyl(dichlormethoxysilan),
3-Chlorpropyl(dichlormethoxysilan),
2-Chlorethyl(dichlormethoxysilan),
1-Chlormethyl(dichlormethoxysilan),
3-Chlorbutyl(dichlorethoxysilan),
3-Chlorpropyl(dichlorethoxysilan),
2-Chlorethyl(dichlorethoxysilan),
1-Chlormethyl(dichlorethoxysilan),
3-Chlorbutyl(chlordiethoxysilan),
3-Chlorpropyl(chlordiethoxysilan),
2-Chlorethyl(chlordiethoxysilan),
1-Chlormethyl(chlordiethoxysilan),
3-Chlorbutyl(chlordimethoxysilan),
3-Chlorpropyl(chlordimethoxysilan),
2-Chlorethyl(chlordimethoxysilan),
1-Chlormethyl(chlordimethoxysilan),
3-Chlorbutyl(dichlormethylsilan),
3-Chlorpropyl(dichlormethylsilan),
2-Chlorethyl(dichlormethylsilan),
1-Chlormethyl(dichlormethylsilan),
3-Chlorbutyl(chlor-)(methyl-)methoxysilan,
3-Chlorpropyl(chlor-)(methyl-)methoxysilan,
2-Chlorethyl(chlor-)(methyl-)methoxysilan,
1-Chlormethyl(chlor-)(methyl-)methoxysilan,
3-Chlorbutyl(chlor-)(methyl-)ethoxysilan,
3-Chlorpropyl(chlor-)(methyl-)ethoxysilan,
2-Chlorethyl(chlor-)(methyl-)ethoxysilan,
1-Chlormethyl(chlor-)(methyl-)ethoxysilan,
3-Chlorbutyl(chlordimethylsilan),
3-Chlorpropyl(chlordimethylsilan),
2-Chlorethyl(chlordimethylsilan) oder
1-Chlormethyl(chlordimethylsilan) eingesetzt werden.

Das (Halogenorganyl)halogensilan kann ein (Halogenorganyl)halogensilan der allgemeinen Formeln III, IV oder V oder eine Mischung aus (Halogenorganyl)halogensilanen der allgemeinen Formeln III, IV oder V sein.

Zu Beginn der Umsetzung und/oder während der Umsetzung und/oder zum Ende der Umsetzung können polare, protische, aprotische, basische oder saure Additive zur Reaktionsmischung zugegeben werden.

Additive können beispielsweise H₂S, (Alkaliion)H₂PO₄, (Alkaliion)₂HPO₄, (Alkaliion)₃PO₄ (Alkaliion)HCO₃, (Alkaliion)₂CO₃, (Alkaliion)₂SO₄ oder (Alkaliion)HSO₄ sein. Bevorzugt können KH₂PO₄, K₂HPO₄, KHCO₃, NaHCO₃, K₂CO₃ oder Na₂CO₃ eingesetzt werden.

Die Rohproduktausbeute des erfindungsgemäßen Verfahrens kann bei der Herstellung von Verbindungen der allgemeinen Formel I größer als 70%, bevorzugt größer als 85%, besonders bevorzugt größer als 90%, ganz besonders bevorzugt größer als 95%, bezogen auf die molare Menge des verwendeten (Halogenorganyl)alkylpolyethersilans sein.

Die Rohproduktausbeute kann die gravimetrisch bestimmte Summe aller isolierten Silanverbindungen, nachdem Lösungsmittel und Feststoffe entfernt sind, sein.

Bei der Herstellung von Verbindungen der allgemeinen Formel I kann die Menge des als Nebenprodukt gebildeten (X)(X')(X")Si-(R^{I})-S-(R^{I})-Si(X)(X')(X") kleiner als 50 Gew.-%, bevorzugt kleiner als 15 Gew.-%, besonders bevorzugt kleiner als 10 Gew.-%, ganz besonders bevorzugt kleiner als 5 Gew.-%, bezogen auf die Rohproduktmenge sein.

Die bei der Herstellung von Verbindungen der allgemeinen Formel I eingesetzten trockenen Mercaptierungsreagenzien können als Feststoffe oder in Lösung der Reaktion zugesetzt werden.

Das (Halogenorganyl)alkylpolyethersilan, Additive und Lösungsmittel können miteinander in beliebiger Reihenfolge, Weise, Temperatur und Zeitdauer vermischt werden und erst dann das trockene Mercaptierungsreagenz zugegeben werden.

Das (Halogenorganyl)alkylpolyethersilan, Additive und das trockene Mercaptierungsreagenz können miteinander in beliebiger Reihenfolge, Weise, Temperatur und Zeitdauer vermischt werden und erst dann das Lösungsmittel zugegeben werden.

Das trockene Mercaptierungsreagenz, Additive und das Lösungsmittel können miteinander in beliebiger Reihenfolge, Weise, Temperatur und Zeitdauer vermischt werden und erst dann das (Halogenorganyl)alkylpolyethersilan zugegeben werden.

Das (Halogenorganyl)alkylpolyethersilan, das Lösungsmittel und das trockene Mercaptierungsreagenz können miteinander in beliebiger Reihenfolge, Weise, Temperatur und Zeitdauer vermischt werden und erst dann Additive zugegeben werden.

### (Mercaptoorganyl)alkylpolyethersilane der allgemeinen Formel I

(X)(X')(X")Si-R^{I}-SH I

können durch Umsetzung von trockenen Mercaptierungsreagenzien mit (Halogenorganyl)alkylpolyethersilan der allgemeinen Formel II

(X)(X')(X")Si-R^{I}-Hal II

und gegebenfalls Additiven und/oder Lösungsmittel, bevorzugt in einem geschlossenen Gefäß unter Luftabschluß und einem erhöhten Druck hergestellt werden.

Es kann durch die Wahl des (Halogenorganyl)alkylpolyethersilans, der Additive und des Lösungsmittels aktiv und gezielt Einfluß auf die Zusammensetzung von Mischungen aus Verbindungen der allgemeinen Formel I genommen werden.

Die Menge an hydrolisierbarem Si-Halogenid in dem (Halogenorganyl)alkylpolyethersilan kann zwischen 1 und 1000 mg/kg betragen.

Die Menge an hydrolisierbarem Si-Halogenid in dem (Halogenorganyl)alkylpolyethersilan kann bevorzugt zwischen 5 und 500 ppm, besonders bevorzugt zwischen 5 und 200 ppm, ganz besonders bevorzugt zwischen 10 und 50 ppm, betragen.

Die Menge an hydrolisierbarem Si-Halogenid wird durch das folgende Verfahren bestimmt:
Maximal 20 g der Probe werden in einem 150 ml Becherglas mit 80 ml Ethanol und 10 ml Essigsäure versetzt. Der Halogenidgehalt wird potentiographisch mit Silbernitratlösung (c(AgNO₃)=0,01 mol/l) titriert.
Das erfindungsgemäße Verfahren kann lösungsmittelfrei oder in Gegenwart von Lösungsmittel durchgeführt werden.

Als Lösungsmittel können Mischungen von Lösungsmitteln eingesetzt werden.

Lösungsmittel können nichtalkoholische Lösungsmittel sein. Als nichtalkoholische Lösungsmittel können Alkane, wie beispielsweise Pentan, Hexan, Cyclohexan, Heptan oder Oktan, Ether, wie beispielsweise Diethylether, Tetrahydrofuran, 1,2-Dimethoxyethan, Dioxan, Dioxolan, Ethylenglykole oder Propylenglykole, aromatische Lösungsmittel, wie beispielsweise Benzol, Toluol, o-Xylol, m-Xylol oder p-Xylol, oder carbonylhaltige Lösungsmittel, wie beispielsweise Dimethylformamid, eingesetzt werden.

Lösungsmittel können komprimierte Gase sein. Komprimierte Gase können im flüssigen, im nahekritischen Zustand oder im überkritischen Zustand sein. Komprimierte Gase können H₂S oder NH₃ sein.

Lösungsmittel können Alkohole sein. Als Alkohole können primäre, sekundäre oder tertiäre Alkohole mit 1 bis 24, vorzugsweise 1-4 und 12-24, besonders bevorzugt 1-4 und 12 - 18, Kohlenstoffatomen eingesetzt werden.

Als primäre, sekundäre oder tertiäre Alkohole können Methanol, Ethanol, n-Propanol, i-Propanol, i-Butanol, t-Butanol, n-Butanol, lineares oder verzweigtes Dodecanol, n-Tridecanol, i-Tridecanol, lineares oder verzweigtes Tetradecanol, lineares oder verzweigtes Hexadecanol oder lineares oder verzweigtes Octadecanol eingesetzt werden.

Als Alkohol können Alkyletheralkohole der Formel HO-(CR^{III}₂)-O-Alk^{I} oder HO-(CR^{III}₂)_{g}-O-Alk^{I} oder Alkylpolyetheralkohole der Formel HO-(CR^{III}₂O)_{g}-Alk^{II} oder HO-(CR^{III}₂-CR^{III}₂-O)_{g}-Alk^{II} eingesetzt werden, mit g = 2-20, bevorzugt 2-10, besonders bevorzugt 3-6, R^{III} unabhängig voneinander H oder eine Alkylgruppe, vorzugsweise CH₃-Gruppe, ist, und Alk^{I} und Alk^{II} unabhängig voneinander eine verzweigte oder unverzweigte, gesättigte oder ungesättigte, aliphatische, aromatische oder gemischt aliphatische /aromatische einbindige C₁-C₃₅ -, bevorzugt C₂-C₂₅-, besonders bevorzugt C₃-C₂₀ -, ganz besonders bevorzugt C₆ -C₁₈ -, außerordentlich bevorzugt C₁₁-C₁₈, Kohlenwasserstoffgruppe ist.

Als Alkylpolyetheralkohole können HO-(CH₂-CH₂-O)ₐ-C_{b}H_{2b+1}, mit a gleich 2 bis 20, bevorzugt 2-10, besonders bevorzugt 2-8, ganz besonders bevorzugt 3-6, und b = 1-30, bevorzugt 2-20, besonders bevorzugt 6-18, ganz besonders bevorzugt 10-18, eingesetzt werden.

Alkylpolyetheralkohole können sein
HO- (CH₂-CH₂-O)₂-C₆H₁₃, HO-(CH₂-CH₂-O)₃-C₆H₁₃, HO-(CH₂-CH₂-O)₄-C₆H₁₃, HO-(CH₂-CH₂-O)₅-C₆H₁₃, HO-(CH₂-CH₂-O)₆-C₆H₁₃ HO-(CH₂-CH₂-O)₇-C₆H₁₃, HO-(CH₂-CH₂-O)₈-C₆H₁₃, HO-(CH₂-CH₂-O)₉-C₆H₁₃,
HO-(CH₂-CH₂-O)₂-C₁₀H₂₁, HO-(CH₂-CH₂-O)₃-C₁₀H₂₁, HO-(CH₂-CH₂-O)₄-C₁₀H₂₁, HO-(CH₂-CH₂-O)₅-C₁₀H₂₁, HO-(CH₂-CH₂-O)₆-C₁₀H₂₁, HO-(CH₂-CH₂-O)₇-C₁₀H₂₁, HO-(CH₂-CH₂-O)₈-C₁₀H₂₁, HO-(CH₂-CH₂-O)₉-C₁₀H₂₁,
HO-(CH₂-CH₂-O)₂-C₁₃H₂₇, HO-(CH₂-CH₂-O)₃-C₁₃H₂₇, HO-(CH₂-CH₂-O)₄-C₁₃H₂₇, HO-(CH₂-CH₂-O)₅-C₁₃H₂₇, HO-(CH₂-CH₂-O)₆-C₁₃H₂₇, HO-(CH₂CH₂-O)-₇-C₁₃H₂₇, HO-(CH₂-CH₂-O)₈-C₁₃H₂₇, HO-(CH₂-CH₂-O)₉-C₁₃H₂₇,
HO-(CH₂-CH₂-O)₂-C₁₅H₃₁, HO-(CH₂-CH₂-O)₃-C₁₅H₃₁, HO-(CH₂-CH₂-O)₄-C₅₁₅H₃₁, HO-(CH₂-CH₂-O) ₅-C₁₅H₃₁, HO-(CH₂-CH₂-O)₆-C₁₅H₃₁, HO-(CH₂-CH₂-O)₇-C₁₅H₃₁, HO-(CH₂-CH₂-O)₈-C₁₅H₃₁ oder HO-(CH₂-CH₂-O)₉-C₁₅H₃₁.

Als Alkohole können Mischungen von Alkoholen eingesetzt werden.

Als Alkohole können Mischungen von Alkylpolyetheralkoholen eingesetzt werden.

Wenn das Lösungsmittel ein Alkohol ist, kann ein Teil des als Lösungsmittel verwendeten Alkohols während der Mercaptierungsreaktion, durch Umesterung am Silicium, in das Produkt der allgemeinen Formel I eingebaut werden.

Die Menge an Lösungsmittel kann mindestens 0,1 Gew.-%, bevorzugt 10 bis 1000 Gew.-%, besonders bevorzugt 25 bis 500 Gew.-%, ganz besonders bevorzugt 50 bis 200 Gew.-%, der eingesetzten Halogenorganyl(alkylpolyethersilane) betragen, wenn das Lösungsmittel kein komprimiertes Gas ist.

Unter erhöhtem Druck kann bei der Verwendung von Lösungsmitteln die keine komprimierten Gase sind, ein Überdruck von 0,1 bis 50 bar, bevorzugt 0,5 bis 25 bar, besonders bevorzugt 0,5 bis 10 bar, außerordentlich bevorzugt 0,5 bis 6 bar über Normaldruck verstanden werden.

Unter erhöhtem Druck kann bei der Verwendung von komprimierten Gasen ein Überdruck von 0,1 bis 250 bar, bevorzugt 0,5 bis 200 bar, besonders bevorzugt 1 bis 150 bar, außerordentlich bevorzugt 1 bis 100 bar über Normaldruck verstanden werden.

Die Umsetzung kann bei Temperaturen zwischen 0 und 200°C, bevorzugt zwischen 50 und 150°C, besonders bevorzugt zwischen 60 und 125°C, außerordentlich bevorzugt zwischen 70 und 110°C, erfolgen.

Die bezüglich der Ausbeute an Zielprodukt und Ausnutzung des Reaktionsvolumens optimale Reaktionstemperatur und oder Druck kann in Abhängigkeit von der Struktur der eingesetzten

(Halogenorganyl)alkyoxysilans und des Lösungsmittels variieren.

Die Umsetzung kann in einem geschlossenen Behälter unter Schutzgas erfolgen.

Die Umsetzung kann in korrosionsbeständigen oder korrosionsanfälligen Reaktionsgefäßen oder Autoklaven erfolgen.

Die Umsetzung kann bevorzugt in korrosionsbeständigen Reaktionsgefäßen oder Autoklaven, beispielsweise aus Glas, Teflon, emailliertem bzw. beschichteten Stahl, Hastelloy oder Tantal, erfolgen.

Die Nebenproduktmenge kann durch Wahl der Reaktionsbedingungen kleiner als 20 mol-%, bevorzugt kleiner als 15 mol-%, besonders bevorzugt kleiner als 10 mol-% bezogen auf das eingesetzte (Halogenorganyl)alkylpolyethersilan, betragen.

Neben den gewünschten Mercaptoorganylsilanverbindungen können als Nebenprodukte die entsprechenden Monosulfane, sowie in Abhängigkeit von der Struktur der monomeren Mercaptoorganylsilanverbindung verschiedene Kombinationen von dimeren oder oligomeren Siloxanen aus Produkten oder auch Produkten mit Edukten entstehen.

Ein Vorteil des erfindungsgemäßen Verfahrens sind die hohen Umsätze bei kurzen Batchzeiten und bei technisch einfach realisierbaren Temperaturen.

### Beispiele:

Als getrocknetes NaSH wird das kommerzielle Produkt der Firma STREM / ABCR eingesetzt (Wassergehalt: 0,1 Gew.-% bestimmt nach oben beschriebener Methode).

Das verwendete H₂S (Reinheit 99,5%+) wird in einer Gasflasche von der Firma Aldrich bezogen.

Die Ausgangsverbindungen
Cl-CH₂-CH₂-CH₂-Si(O-C₂H₅)[(O-CH₂-CH₂)₅-O-C₁₃H₂₇]₂,
Cl-CH₂-CH₂-CH₂-Si(O-C₂H₅)₂[(O-CH₂-CH₂)₅-O-C₁₃H₂₇],
Cl-CH₂-CH₂-CH₂-Si(O-C₂H₅)₂[(O-CH₂-CH₂)₁₀-O-C₁₃H₂₇],
Cl-CH₂CH₂-CH₂-Si(O-C₂H₅)₂[(O-CH₂-CH₂)₁₈-O-C₁₃H₂₇],
Cl-CH₂-CH₂-CH₂-Si(O-Et)[(O-CH₂-CH₂)-O-C₄H₉]₂ und
Cl-CH₂-CH₂-CH₂-Si(O-Et)[(O-CH₂-CH₂)₂-O-C₂H₅]₂
werden analog dem in DE 102006027235.8 beschriebenen Verfahren durch katalysierte Umesterung aus den Chlorpropyl(triethoxysilanen) und den entsprechenden (Polyether)monoalkylalkoholen hergestellt:

### Beispiel 1

### HS-CH₂-Si(Me)(O-C₃H₆)(O-CH₂-CH₂)₅-O-C₁₃H₂₇

In einem Glasautoklaven der Firma Buechi werden 300 ml trockenes i-Propanol (Seccosolv) und 37,1 g trockenes NaSH (ex STREM) vorgelegt. Zu der Mischung werden 6,3 g Eisessig gegeben und der Auoklav verschlossen. In den Autoklav werden mit einer Pumpe 471,6 g Cl-CH₂-Si (Me) [(O-CH₂-CH₂)₅-O-C₁₃H₂₇]₂ bei 50°C innerhalb von 40 min zugegeben. Die Suspension wird für 180 min bei 80°C gerührt. Der in der Suspension enthaltene Feststoff wird abfiltriert und mit 50 ml i-Propanol gewaschen. Das Filtrat wird am Rotationsverdampfer eingeengt. Nach der Endfiltration werden 435,9 g Produkt erhalten.

Die ¹³C-NMR-Analyse des erhaltenen Produktes ergibt bezüglich der Silanverbindungen folgende, gemittelte Zusammensetzung
96% HS-CH₂-Si (Me) (O-C₃H₆)_{0,52}((O-CH₂-CH₂)₅-O-C₁₃H₂₇)_{1,48}
4% Cl-CH₂-Si(Me)(O-C₃H₆)_{0,52}((O-CH₂-CH₂)₅-O-C₁₃H₂₇)_{1,48}.

Der bei der Umesterung freigesetzte Polyetheralkohol H-(O-CH₂-CH₂)_{g}-O-C₁₃H₂₇ ist im ¹³C-NMR-Spektrum nachweisbar.

### Beispiel 2

### HS-CH₂-Si(O-Et)_{0,33}(O-C₃H₇)_{1,56}[(O-CH₂-CH₂)₅-O-C₁₃H₂₇]_{1,1}

In einem Glasautoklaven der Firma Buechi werden 300 ml trockenes i-Propanol (Seccosolv) und 37,5 g trockenes NaSH (ex STREM) vorgelegt. Zu der Mischung werden 6,3 g Eisessig gegeben und der Auoklav verschlossen. In den Autoklav werden mit einer Pumpe 283,5 g Cl-CH₂-Si(OEt)₂[(O-CH₂-CH₂)₅-O-C₁₃H₂₇] bei 50°C innerhalb von 40 min zugegeben. Die Suspension wird für 180 min bei 80°C gerührt. Der in der Suspension enthaltene Feststoff wird abfiltriert. Das Filtrat wird am Rotationsverdampfer eingeengt. Nach der Endfiltration werden 203,3 g Produkt erhalten.

Die ¹³C-NMR-Analyse des erhaltenen Produktes ergibt bezüglich der Silanverbindungen folgende, gemittelte Zusammensetzung

HS-CH₂-Si(O-Et)_{0,33}(O-C₃H₇)_{1,56}[(O-CH₂-CH₂)₅-O-C₁₃H₂₇]_{1,1}.
Die Substitution der Cl-Funktion mit einer HS-Funktion verläuft laut den Ergebnissen der NMR-Untersuchungen quantitativ.

### Beispiel 3

### Umsetzung von Cl-CH₂-CH₂-CH₂-Si(O-C₂H₅)[(O-CH₂-CH₂)₅-O-C₁₃H₂₇]₂

In einem Glasautoklaven der Firma Buechi werden 97 g trockenes i-Propanol (Seccosolv) und 7,6 g getrocknetes NaSH vorgelegt. In den Autoklav werden mit einer Pumpe 145 g Cl-CH₂-CH₂-CH₂-Si(O-C₂H₅)[(O-CH₂-CH₂)₅-O-C₁₃H₂₇]₂ gegeben. Die Suspension und der Autoklav werden für 15 min H₂S gespült, anschließend der Autoklav geschlossen und mit H₂S auf 1 bar Überdruck eingestellt. Die Suspension wird für 30 min bei 50°C und anschließend für 300 min bei 85°C gerührt. Die erhaltene Suspension wird in einen Kolben überführt, destillativ vom Lösungsmittel befreit und filtriert. Es werden 136,7 g Produkt erhalten, das entspricht 94,3 % d. Theorie.

Die ¹H-NMR-Analyse des erhaltenen Produktes ergibt, dass 100% der Cl-Funktionen in HS-Funktionen und davon 4 % in Oxidationsfolgeprodukte mit S₂-Funktion umgewandelt werden.

Der bei der stattfindenden Umesterung mit i-Propanol freigesetzte Polyetheralkohol H-(O-CH₂-CH₂)₅-O-C₁₃H₂₇ ist im ¹³C-NMR-Spektrum nachweisbar.

### Beispiel 4

### HS-CH₂-CH₂-CH₂-Si(O-Et)[(O-CH₂-CH₂)₅-O-C₁₃H₂₇]₂

In einem Glasautoklaven der Firma Buechi werden 15,6 g getrocknetes NaSH vorgelegt und mit einer Pumpe 300 g Cl-CH₂-CH₂-CH₂-Si(O-C₂H₅) [(O-CH₂-CH₂)₅-O-C₁₃H₂₇]₂ dazugegeben. Die Suspension und der Autoklav werden für 15 min H₂S gespült, anschließend der Autoklav geschlossen und mit H₂S auf 1 bar Überdruck eingestellt. Die Suspension wird für 30 min bei 50°C und anschließend für 300 min bei 110-120°C gerührt. Die erhaltene Suspension wird filtriert, in einen Kolben überführt und für 30 min bei 80°C im Vakuum von flüchtigen Bestandteilen befreit. Es werden 276,6 g Produkt erhalten, das entspricht 92,6 % der Theorie. Die ¹H-NMR-Analyse des erhaltenen Produktes ergibt, dass 100% der Cl-Funktionen in HS-Funktionen und davon 5,2 % in Oxidationsfolgeprodukte mit S₂-Funktion umgewandelt werden.

Die Umesterungsverteilung am Silicium bleibt bei der Reaktion intakt und entspricht laut NMR-Untersuchungen der des Ausgangsstoffes Cl-CH₂-CH₂-CH₂-Si(O-C₂H₅)[(O-CH₂-CH₂)₅-O-C₁₃H₂₇]₂.

### Beispiel 5

### HS-CH₂-CH₂-CH₂-Si(O-Et)₂[(O-CH₂-CH₂)₅-O-C₁₃H₂₇]

In einem Glasautoklaven der Firma Buechi werden 15,6 g getrocknetes NaSH vorgelegt und mit einer Pumpe 200 g Cl-CH₂-CH₂-CH₂-Si(O-C₂H₅)₂[(O-CH₂-CH₂)₅-O-C₁₃H₂₇] dazugegeben. Die Suspension und der Autoklav werden für 15 min mit H₂S gespült und anschließend der Autoklav geschlossen. Die Suspension wird für 30 min bei 75°C und anschließend für 300 min bei 110-120°C gerührt. Die erhaltene Suspension wird filtriert und in einen Kolben überführt. Es werden 185,2 g Produkt erhalten, das entspricht 92,9 % der Theorie.

### Beispiel 6

### HS-CH₂-CH₂-CH₂-Si(O-Et)₂[(O-CH₂-CH₂)₁₀-O-C₁₃H₂₇]

In einem Glasautoklaven der Firma Buechi werden 15,6 g getrocknetes NaSH vorgelegt und mit einer Pumpe 257 g Cl-CH₂-CH₂-CH₂-Si(O-C₂H₅)₂[(O-CH₂-CH₂)₁₀-O-C₁₃H₂₇] dazugegeben. Die Suspension und der Autoklav werden für 15 min mit H₂S gespült und anschließend der Autoklav geschlossen. Die Suspension wird für 30 min bei 50°C und anschließend für 300 min bei 110-120°C gerührt. Die erhaltene Suspension wird filtriert und in einen Kolben überführt. Es werden 246,7 g Produkt erhalten, das entspricht 96,2 % der Theorie.

### Beispiel 7

### HS-CH₂-CH₂-CH₂-Si(O-Et)₂[(O-CH₂-CH₂)₁₈-O-C₁₃H₂₇]

In einem Glasautoklaven der Firma Buechi werden 15,6 g getrocknetes NaSH vorgelegt und mit einer Pumpe 350 g Cl-CH₂-CH₂-CH₂-Si(O-C₂H₅)₂[(O-CH₂-CH₂)₁₈-O-C₁₃H₂₇] dazugegeben. Die Suspension und der Autoklav werden für 15 min mit H₂S gespült und anschließend der Autoklav geschlossen. Die Suspension wird für 30 min bei 50°C und anschließend für 300 min bei 110-120°C gerührt. Die erhaltene Suspension wird filtriert und in einen Kolben überführt. Es werden 336,4 g Produkt erhalten, das entspricht 96,3 % der Theorie.

### Beispiel 8

### HS-CH₂-CH₂-CH₂-Si(O-Et)[(O-CH₂-CH₂)-O-C₄H₉]₂

In einem Glasautoklaven der Firma Buechi werden 15,6 g getrocknetes NaSH vorgelegt und mit einer Pumpe 101,5 g Cl-CH₂-CH₂-CH₂-Si(O-Et)[(O-CH₂-CH₂)-O-C₄H₉]₂ dazugegeben. Die Suspension und der Autoklav werden für 15 min mit H₂S gespült und anschließend der Autoklav geschlossen. Die Suspension wird für 30 min bei 50°C und anschließend für 300 min bei 110-120°C gerührt. Die erhaltene Suspension wird filtriert und in einen Kolben überführt. Es werden 93,6 g Produkt erhalten, das entspricht 92,8 % der Theorie.

Laut ¹H-NMR Untersuchungen sind nur 22% aller Cl-Propylfunktionen zu HS-Propylfunktionen umgewandelt. Die Umesterungsverteilung am Silicium ist gegenüber dem Ausgangsstoff Cl-CH₂-CH₂-CH₂-Si(O-Et)[(O-CH₂-CH₂)-O-C₄H₉]₂ laut NMR-Untersuchungen unverändert.

### Beispiel 9

### HS-CH₂-CH₂-CH₂-Si(O-Et)[(O-CH₂-CH₂)₂-O-C₂H₅]₂

In einem Glasautoklaven der Firma Buechi werden 15,6 g getrocknetes NaSH vorgelegt und mit einer Pumpe 110 g Cl-CH₂-CH₂-CH₂-Si(O-Et)[(O-CH₂-CH₂)₂-O-C₂H₅]₂ dazugegeben. Die Suspension und der Autoklav werden für 15 min mit H₂S gespült und anschließend der Autoklav geschlossen. Die Suspension wird für 30 min bei 50°C und anschließend für 300 min bei 110-120°C gerührt. Die erhaltene Suspension wird filtriert und in einen Kolben überführt. Es werden 98 g Produkt erhalten, das entspricht 90,8 % der Theorie.

Laut ¹H-NMR Untersuchungen sind nur 63% aller Cl-Propylfunktionen zu HS-Propylfunktionen umgewandelt.

Die Umesterungsverteilung am Silicium ist gegenüber dem Ausgangsstoff Cl-CH₂-CH₂-CH₂-Si(O-Et)[(O-CH₂-CH₂)₂-O-C₂H₅]₂ laut NMR-Untersuchungen unverändert.

## Patentansprüche

1. Verfahren zur Herstellung von (Mercaptoorganyl)-alkylpolyethersilanen, der allgemeinen Formel I
(X) (X') (X")Si-R^{I}-SH I
, wobei
X eine Alkylpolyethergruppe O-((CR^{II}₂)_{w}-O-)ᵥAlk ist, mit v = 1-40, w = 1-40, R^{II} unabhängig voneinander H, eine Phenyl- oder eine Alkylgruppe ist, Alk eine verzweigte oder unverzweigte, gesättigte oder ungesättigte, substituierte oder unsubstituierte, aliphatische, aromatische oder gemischt aliphatische /aromatische einbindige C₁-C₃₅-Kohlenwasserstoffgruppe ist,
X' ein verzweigtes oder unverzweigtes Alkyl, ein verzweigtes oder unverzweigtes Alkoxy, ein verzweigtes oder unverzweigtes Alkenyloxy-, ein verzweigtes oder unverzweigtes Aryloxy-, eine verzweigte oder unverzweigte Alkylaryloxygruppe, eine verzweigte oder unverzweigte Aralkyloxygruppe oder ein X ist,
X" ein verzweigtes oder unverzweigtes Alkyl, ein verzweigtes oder unverzweigtes Alkoxy, ein verzweigtes oder unverzweigtes Alkenyloxy-, ein verzweigtes oder unverzweigtes Aryloxy-, eine verzweigte oder unverzweigte Alkylaryloxygruppe, eine verzweigte oder unverzweigte Aralkyloxygruppe oder ein X ist,
R^{I} eine verzweigte oder unverzweigte, gesättigte oder ungesättigte, aliphatische, aromatische oder gemischt aliphatische /aromatische zweibindige C₁-C₃₀ Kohlenwasserstoffgruppe ist, **dadurch gekennzeichnet, dass** man trockene Mercaptierungsreagenzien mit einem Wassergehalt von kleiner als 3 Gew.-% mit einem (Halogenorganyl)alkylpolyethersilan umsetzt.

2. Verfahren zur Herstellung von (Mercaptoorganyl)-alkylpolyethersilanen nach Anspruch 1, **dadurch gekennzeichnet, dass** man die Umsetzung in einem geschlossenen Gefäß unter Luftabschluß und einem erhöhten Druck durchführt.

3. Verfahren zur Herstellung von (Mercaptoorganyl)-alkylpolyethersilanen nach Anspruch 1 oder 2, **dadurch gekennzeichnet, dass** man die Umsetzung in einem Lösungsmittel durchführt.

4. Verfahren zur Herstellung von (Mercaptoorganyl)-alkylpolyethersilanen nach Anspruch 1 bis 3, **dadurch gekennzeichnet,**
**dass** man als (Halogenorganyl)alkylpolyethersilan Verbindungen der allgemeinen Formel II
(X)(X')(X")Si-R^{I}-Hal II
einsetzt, wobei R^{I}, X, X' und X" die Bedeutung gemäß Formel I haben und Hal gleich Chlor, Brom, Fluor oder Iod ist.

5. Verfahren zur Herstellung von (Mercaptoorganyl)-alkylpolyethersilanen nach Anspruch 1 bis 3,
**dadurch gekennzeichnet,**
**dass** man als trockene Mercaptierungsreagenzien Alkalimetallhydrogensulfid oder Ammoniumhydrogensulfid einsetzt.

6. Verfahren zur Herstellung von (Mercaptoorganyl)-alkylpolyethersilanen nach Anspruch 5,
**dadurch gekennzeichnet,**
**dass** man als Alkalimetallhydrogensulfid Lithiumhydrogensulfid (LiSH), Natriumhydrogensulfid (NaSH), Kaliumhydrogensulfid (KSH) und Cäsiumhydrogensulfid (CsSH) einsetzt.

7. Verfahren zur Herstellung von (Mercaptoorganyl)-alkylpolyethersilanen nach Anspruch 5,
**dadurch gekennzeichnet,**
**dass** man als Ammoniumhydrogensulfid (NH₄)SH, NH₃(Sub)SH, NH₂(Sub)₂SH oder NH(Sub)₃SH, mit Sub gleich eine verzweigte oder unverzweigte, gesättigte oder ungesättigte, aliphatische, aromatische oder gemischt aliphatische /aromatische einbindige C1-C30 Kohlenwasserstoffgruppe, einsetzt.

8. Verfahren zur Herstellung von (Mercaptoorganyl)-alkylpolyethersilanen nach Anspruch 1 bis 3,
**dadurch gekennzeichnet,**
**dass** man zu Beginn der Umsetzung und/oder während der Umsetzung und/oder zum Ende der Umsetzung Additive zur Reaktionsmischung zugibt.

9. Verfahren zur Herstellung von (Mercaptoorganyl)-alkylpolyethersilanen nach Anspruch 1,
**dadurch gekennzeichnet,**
**dass** die verwendete, molare Menge an trockenem Mercaptierungsreagenz 70 mol% bis 150 mol% der molaren Menge des eingesetzten (Halogenorganyl)alkylpolyethersilans beträgt.

10. Verfahren zur Herstellung von (Mercaptoorganyl)-alkylpolyethersilanen nach Anspruch 1 bis 3,
**dadurch gekennzeichnet,**
**dass** man als Lösungsmittel nichtalkoholische Lösungsmittel, Alkohole oder komprimierte Gase einsetzt.

## Claims

1. Process for preparing (mercaptoorganyl)alkyl polyether silanes of the general formula I
(X) (X') (X")Si-R^{I}-SH I
where
X is an alkyl polyether group O-((CR¹¹₂)_{w}-O-)ᵥ Alk where v = 1-40, w = 1-40, R^{II} are each independently H, a phenyl group or an alkyl group, Alk is a branched or unbranched, saturated or unsaturated, substituted or unsubstituted, aliphatic, aromatic or mixed aliphatic/aromatic monovalent C₁-C₃₅-hydrocarbon group,
X' is a branched or unbranched alkyl, a branched or unbranched alkoxy, a branched or unbranched alkenyloxy group, a branched or unbranched aryloxy group, a branched or unbranched alkylaryloxy group,
a branched or unbranched aralkyloxy group or an X, X" is a branched or unbranched alkyl, a branched or unbranched alkoxy, a branched or unbranched alkenyloxy group, a branched or unbranched aryloxy group, a branched or unbranched alkylaryloxy group, a branched or unbranched aralkyloxy group or an X,
R^{I} is a branched or unbranched, saturated or unsaturated, aliphatic, aromatic or mixed aliphatic/aromatic divalent C₁-C₃₀ hydrocarbon group, **characterized in that** dry mercaptation reagents having a water content of less than 3% by weight are reacted with a (haloorganyl)alkyl polyether silane.

2. Process for preparing (mercaptoorganyl)alkyl polyether silanes according to Claim 1, **characterized in that** the reaction is carried out in a closed vessel with exclusion of air and under an elevated pressure.

3. Process for preparing (mercaptoorganyl)alkyl polyether silanes according to Claim 1 or 2, **characterized in that** the reaction is carried out in a solvent.

4. Process for preparing (mercaptoorganyl)alkyl polyether silanes according to Claims 1 to 3, **characterized in that**
the (haloorganyl)alkyl polyether silanes used are compounds of the general formula II
(X) (X') (X")Si-R^{I}-Hal II
where R^{I}, X, X' and X" are each defined according to formula I, and Hal is chlorine, bromine, fluorine or iodine.

5. Process for preparing (mercaptoorganyl)alkyl polyether silanes according to Claims 1 to 3,
**characterized in that**
the dry mercaptation reagent used is alkali metal hydrogensulfide or ammonium hydrogensulfide.

6. Process for preparing (mercaptoorganyl)alkyl polyether silanes according to Claim 5,
**characterized in that**
the alkali metal hydrogensulfide used is lithium hydrogensulfide (LiSH), sodium hydrogensulfide (NaSH), potassium hydrogensulfide (KSH) and cesium hydrogensulfide (CsSH).

7. Process for preparing (mercaptoorganyl)alkyl polyether silanes according to Claim 5,
**characterized in that**
the ammonium hydrogensulfide used is (NH₄)SH, NH₃(Sub)SH, NH₂(Sub)₂SH or NH(Sub)₃SH, where Sub is a branched or unbranched, saturated or unsaturated, aliphatic, aromatic or mixed aliphatic/aromatic monovalent C1-C30 hydrocarbon group.

8. Process for preparing (mercaptoorganyl)alkyl polyether silanes according to Claims 1 to 3,
**characterized in that**
additives are added to the reaction mixture at the start of the reaction and/or during the reaction and/or at the end of the reaction.

9. Process for preparing (mercaptoorganyl)alkyl polyether silanes according to Claim 1,
**characterized in that**
the molar amount of dry mercaptation reagent used is from 70 mol% to 150 mol% of the molar amount of the (haloorganyl)alkyl polyether silane used.

10. Process for preparing (mercaptoorganyl)alkyl polyether silanes according to Claims 1 to 3,
**characterized in that**
the solvents used are nonalcoholic solvents, alcohols or compressed gases.

## Revendications

1. Procédé pour la préparation de (mercaptoorganyl)alkylpolyéthersilanes de formule générale I
(X) (X') (X")Si-R^{I}-SH I
dans laquelle
X est un groupe alkylpolyéther O-((CR^{II}₂)_{w}-O-)ᵥAlk, où v = 1-40, w = 1-40, R^{II} est chaque fois indépendamment H, un groupe phényle ou un groupe alkyle, Alk est un groupe hydrocarboné en C₁-C₃₅ à une liaison, aliphatique, aromatique ou mixte aliphatique/aromatique, ramifié ou non ramifié, saturé ou insaturé, substitué ou non substitué,
X' est un groupe alkyle ramifié ou non ramifié, un groupe alcoxy ramifié ou non ramifié, un groupe alcényloxy ramifié ou non ramifié, un groupe aryloxy ramifié ou non ramifié, un groupe alkylaryloxy ramifié ou non ramifié, un groupe aralkyloxy ramifié ou non ramifié ou un X,
X" est un groupe alkyle ramifié ou non ramifié, un groupe alcoxy ramifié ou non ramifié, un groupe alcényloxy ramifié ou non ramifié, un groupe aryloxy ramifié ou non ramifié, un groupe alkylaryloxy ramifié ou non ramifié, un groupe aralkyloxy ramifié ou non ramifié ou un X,
R^{I} est un groupe hydrocarboné en C₁-C₃₀ à deux liaisons, aliphatique, aromatique ou mixte aliphatique/aromatique, ramifié ou non ramifié, saturé ou insaturé, **caractérisé en ce qu'**on fait réagir des réactifs de mercaptisation secs, ayant une teneur en eau inférieure à 3 % en poids, avec un (halogéno-organyl)alkylpolyéthersilane.

2. Procédé pour la préparation de (mercapto-organyl)alkylpolyéthersilanes selon la revendication 1, **caractérisé en ce qu'**on effectue la réaction dans un récipient fermé, à l'abri de l'air et sous une pression élevée.

3. Procédé pour la préparation de (mercapto-organyl)alkylpolyéthersilanes selon la revendication 1 ou 2, **caractérisé en ce qu'**on effectue la réaction dans un solvant.

4. Procédé pour la préparation de (mercapto-organyl)alkylpolyéthersilanes selon l'une quelconque des revendications 1 à 3, **caractérisé en ce qu'**on utilise comme (halogéno-organyl)alkylpolyéthersilane des composés de formule II
(X) (X') (X")Si-R^{I}-Hal II
dans laquelle R^{I}, X, X' et X" ont les significations selon la formule I et Hal représente le chlore, le brome, le fluor ou l'iode.

5. Procédé pour la préparation de (mercapto-organyl)alkylpolyéthersilanes selon l'une quelconque des revendications 1 à 3, **caractérisé en ce qu'**on utilise comme réactifs de mercaptisation secs un hydrogénosulfure de métal alcalin ou l'hydrogénosulfure d'ammonium.

6. Procédé pour la préparation de (mercapto-organyl)alkylpolyéthersilanes selon la revendication 5, **caractérisé en ce qu'**on utilise comme hydrogénosulfure de métal alcalin l'hydrogénosulfure de lithium (LiSH), l'hydrogénosulfure de sodium (NaSH), l'hydrogénosulfure de potassium (KSH) et l'hydrogénosulfure de césium (CsSH).

7. Procédé pour la préparation de (mercapto-organyl)alkylpolyéthersilanes selon la revendication 5, **caractérisé en ce qu'**on utilise comme hydrogénosulfure d'ammonium (NH₄)SH, NH₃(Sub)SH, NH₂(Sub)₂SH ou NH(Sub)₃SH, où Sub représente un groupe hydrocarboné en C₁-C₃₀ à une liaison, aliphatique, aromatique ou mixte aliphatique/aromatique, ramifié ou non ramifié, saturé ou insaturé.

8. Procédé pour la préparation de (mercapto-organyl)alkylpolyéthersilanes selon l'une quelconque des revendications 1 à 3, **caractérisé en ce qu'**au début de la réaction et/ou pendant la réaction et/ou à la fin de la réaction on ajoute des additifs au mélange réactionnel.

9. Procédé pour la préparation de (mercapto-organyl)alkylpolyéthersilanes selon la revendication 1, **caractérisé en ce que** la quantité molaire utilisée de réactif de mercaptisation sec représente de 70 % en moles à 150 % en moles de la quantité molaire de l'(halogéno-organyl)alkylpolyéthersilane utilisé.

10. Procédé pour la préparation de (mercapto-organyl)alkylpolyéthersilanes selon l'une quelconque des revendications 1 à 3, **caractérisé en ce qu'**on utilise comme solvant des solvants non alcooliques, des alcools ou des gaz comprimés.
